(19)

**Europäisches Patentamt**

**European Patent Office**

**Office européen des brevets**

(11)     **EP 2 018 750 B1**

(12)     # EUROPEAN PATENT SPECIFICATION

(45) Date of publication and mention
of the grant of the patent:
**09.03.2016 Bulletin 2016/10**

(21) Application number: **07746609.2**

(22) Date of filing: **21.05.2007**

(51) Int Cl.:
*H04L 5/00* (2006.01)          *H04L 27/26* (2006.01)
*H04L 27/18* (2006.01)          *H04L 27/34* (2006.01)

(86) International application number:
**PCT/KR2007/002461**

(87) International publication number:
**WO 2007/136211 (29.11.2007 Gazette 2007/48)**

(54) **A METHOD OF UTILIZING AND MANIPULATING WIRELESS RESOURCES FOR EFFICIENT AND EFFECTIVE WIRELESS COMMUNICATION**

VERFAHREN ZUR VERWENDUNG UND MANIPULATION DRAHTLOSER RESSOURCEN FÜR EFFIZIENTE UND LEISTUNGSFÄHIGE DRAHTLOSE KOMMUNIKATION

PROCÉDÉ D'UTILISATION ET DE MANIPULATION DE RESSOURCES SANS FIL POUR UNE COMMUNICATION SANS FIL EFFICACE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.05.2006 US 801689 P**
**23.03.2007 US 896831 P**
**03.04.2007 US 909906 P**
**05.04.2007 US 910420 P**

(43) Date of publication of application:
**28.01.2009 Bulletin 2009/05**

(73) Proprietor: **LG Electronics Inc.**
**Yeongdeungpo-gu**
**Seoul**
**150-721 (KR)**

(72) Inventors:
• **WANG, Shu**
**Sandiego, California 92122 (US)**
• **YOON, Young Cheul**
**San Diego, , California 92122 (US)**
• **KIM, Sang Gook**
**San Diego, CA 92128 (US)**
• **SUN, Li-Hsiang**
**San Diego, CA 92126 (US)**
• **KWON, Soon Yil**
**San Diego, CA 92128 (US)**
• **LEE, Suk Woo**
**San Diego, CA 92128 (US)**

• **KIM, Ho Bin**
**San Diego, CA 92121 (US)**
• **YI, Byung Kwan**
**San Diego, CA 92130 (US)**

(74) Representative: **Ter Meer Steinmeister & Partner Patentanwälte mbB**
**Nymphenburger Straße 4**
**80335 München (DE)**

(56) References cited:
**EP-A1- 1 610 480          EP-A2- 1 548 971**
**WO-A2-2005/013530          US-A1- 2004 009 783**

• **LUO WEI ET AL: "Space-time-frequency block coding over rayleigh fading channels for OFDM systmes", COMMUNICATION TECHNOLOGY PROCEEDINGS, 2003. ICCT 2003. INTERNATIONAL C ONFERENCE ON APRIL 9 - 11, 2003, PISCATAWAY, NJ, USA,IEEE, vol. 2, 9 April 2003 (2003-04-09), pages 1008-1012, XP010644021, DOI: 10.1109/ICCT.2003.1209700 ISBN: 978-7-5635-0686-6**

**(Cont. next page)**

- LEI SHAO ET AL: "Rate-one Space Frequency Block Codes with Maximum Diversity Gain for MIMO-OFDM", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 2, 1 December 2003 (2003-12-01), pages 809-813, XP010678177, ISBN: 978-0-7803-7974-9
- LE HAI DOAN ET AL: "Hierarchical Subgroup Power and Modulation Coding Adaptation - A New Frequency-Space Link Adaptation Scheme in MIMO-OFDM Eigenmode Adaptive Transmission System -", 2005 IEEE 61ST VEHICULAR TECHNOLOGY CONFERENCE. VTC2005-SPRING - 30 MAY-1 JUNE 2005 - STOCKHOLM, SWEDEN, IEEE, PISCATAWAY, NJ, USA, vol. 1, 30 May 2005 (2005-05-30), pages 668-672, XP010855479, DOI: 10.1109/VETECS.2005.1543376 ISBN: 978-0-7803-8887-1
- MOUSTAFA ET AL.: 'Efficient Radio Resource Control in Wireless Netwoks' IEEE TRANSACTION ON WIRELESS COMMUNICATION. vol. 3, no. 6, November 2004, pages 2385 - 2394, XP008131817
- 'Proceding of IEEE International Conference on Communications', 28 April 2002 article MOUSTAFA ET AL.: 'Efficient Radio Resource Control for Manhattan Street Environments', pages 3377 - 3381, XP010590095

**Description**

TECHNICAL FIELD

The present invention relates to a method of using wireless resources, and more particularly, to a method of utilizing and manipulating wireless resources for efficient and effective wireless communication.

BACKGROUND ART

In the world of cellular telecommunications, those skilled in the art often use the terms IG, 2G, and 3G. The terms refer to the generation of the cellular technology used. IG refers to the first generation, 2G to the second generation, and 3 G to the third generation.

IG refers to the analog phone system, known as an AMPS (Advanced Mobile Phone Service) phone systems. 2G is commonly used to refer to the digital cellular systems that are prevalent throughout the world, and include CDMAOne, Global System for Mobile communications (GSM), and Time Division Multiple Access (TDMA). 2G systems can support a greater number of users in a dense area than can IG systems.

3G commonly refers to the digital cellular systems currently being deployed. These 3G communication systems are conceptually similar to each other with some significant differences.

A space-time-frequency code scheme for OFDM systems is described in LUO WEI ET AL: "Space-time-frequency block coding over rayleigh fading channels for OFDM systems", COMMUNICATION TECHNOLOGY PROCEEDINGS, 2003. ICCT 2003. IN-TERNATIONAL CONFERENCE ON APRIL 9 - 11, 2003, PISCATAWAY, NJ, USA,IEEE, vol. 2, 9 April 2003 (2003-04-09), pages 1008-1012, DOI: 10.1109/ICCT.2003.1209700 ISBN: 978-7-5635-0686-6. A sequence C of code bits, after being interleaved by a bit interleaver, is grouped into a number G of groups. Each group is encoded by a unitary constellation-rotating precoding and a ST block. The precoded symbols are allocated to antennas TX1 and TX2. The allocated symbols are modulated using an inverse fast Fourier transform (IFFT).

EP 1 548 971 A2 discloses a constellation-rotating orthogonal space-time block coding technique. A constellation-rotating precoder generates a number of sub-vectors from an input vector including a plurality of input symbols. The groups are generated by grouping the symbols of the input vector into P groups each having m symbols. The resulting sub-input vectors are multiplied by a constellation-rotating matrix $\theta$, to obtain P mth-order sub-rotated vectors. Using the obtained mth-order sub-rotated vectors, code word matrices are generated and mapped to the plurality of the transmitted antennas.

LEI SHAO ET AL: "Rate-one Space Frequency Block Codes with Maximum Diversity Gain for MIMO-OFDM", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 2, 1 December 2003 (2003-12-01), pages 809-813, ISBN: 978-0-7803-7974-9 relates to space frequency codes for an OFDM system with several transmit and receive antennas. A vector of input symbols is divided into G groups of a given size, and then multiplied by the same constellation-rotation (CR) precoder $\theta$.

LE HAI DOAN ET AL: "Hierarchical Subgroup Power and Modulation Coding Adaptation - A New Frequency-Space Link Adaptation Scheme in MIMO-OFDM Eigenmode Adaptive Transmission System -", 2005 IEEE 61 ST VEHICULAR TECHNOLOGY CONFERENCE. VTC2005- SPRING - 30 MAY-1 JUNE 2005 - STOCKHOLM, SWEDEN, IEEE, PISCATAWAY, NJ, USA, vol. 1, 30 May 2005 (2005-05-30), pages 668-672, DOI: 10.1109/VETECS.2005.1543376 ISBN: 978-0-7803-8887-1 proposes the Hierarchical Subgroup Adaptation (HAS) algorithm to reduce the amount of overhead signaling and computational complexity for MIMO-OFDM Eigenmode adaptive transmission systems. Consecutive channels are grouped together to have a same modulation coding level to decrease the overhead signaling.

In a wireless communication system, an effective transmission of data crucial and at the same time, it is important to improve transmission efficiency. To this end, it is important that more efficient ways of transmitting and receiving data are developed.

DISCLOSURE

Accordingly, the present invention is directed to a method of utilizing and manipulating wireless resources for efficient and effective wireless communication that substantially obviates one or more problems due to limitations and disadvantages of the related art.

TECHNICAL PROBLEM

An object of the present invention is to provide a method allocating symbols in a wireless communication system.

TECHNICAL SOLUTION

The object is solved by the subject-matter of the independent claim.

To achieve these object and other advantages and in accordance with the purpose of the invention, as embodied and broadly described herein, a method of allocating symbols in a wireless communication system includes receiving at least one data stream from at least one user, grouping the at least one data streams into at least one group, wherein each group is comprised of at least one data stream, precoding each group of data streams in multiple stages, and allocating the precoded symbols.

In an example, a method of performing hierarchical modulation signal constellation in a wireless communication system includes allocating multiple symbols according to a bits-to-symbol mapping rule representing different signal constellation points with different bits, wherein the mapping rule represents one (1) or less bit difference between closest two symbols.

In a further example, a method of transmitting more than one signal in a wireless communication system includes allocating multiple symbols to a first signal constellation and to a second constellation, wherein the first signal constellation refers to base layer signals and the second signal constellation refers to enhancement layer signals, modulating the multiple symbols of the first signal constellation and the second signal constellation, and transmitting the modulated symbols.

ADVANTAGEOUS EFFECTS

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

It is to be understood that both the foregoing general description and the following detailed description of the present invention are exemplary and explanatory and are intended to provide further explanation of the invention as claimed.

**DESCRIPTION OF THE DRAWINGS**

The accompanying drawings, which are included to provide a further understanding of the invention and are incorporated in and constitute a part of this application, illustrate embodiment(s) of the invention and together with the description serve to explain the principle of the invention. In the drawings;

FIG. 1 is an exemplary diagram of a generalized MC-CDM structure;
FIG. 2 is another exemplary diagram of a generalized MC-CDM structure;
FIG. 3 is an exemplary diagram illustrating a generalized MC-CDM structure in which precoding/rotation is performed on groups;
FIG. 4 is an exemplary diagram illustrating a multi-stage rotation;
FIG. 5 is another exemplary diagram of a generalized MC-CDM structure;
FIG. 6 is an exemplary diagram illustrating frequency-domain interlaced MC-CDM;
FIG. 7 is an exemplary diagram illustrating an example of Gray coding;
FIG. 8 is an exemplary diagram illustrating mapping for regular QPSK/QPSK hierarchical modulation or 16QAM modulation;
FIG. 9 is an exemplary diagram illustrating bits-to-symbol mapping for 16QAM/QPSK;
FIG. 10 is another exemplary diagram illustrating bits-to-symbol mapping for 16QAM/QPSK;
FIG. 11 is another exemplary diagram illustrating bits-to-symbol mapping for 16QAM/QPSK;
FIG. 12 is another exemplary diagram illustrating bits-to-symbol mapping for 16QAM/QPSK;
FIG. 13 is an exemplary diagram illustrating bits-to-symbol mapping for QPSK/QPSK;
FIG. 14 is an exemplary diagram illustrating an enhancement layer bits-to-symbol for base layer 0x0;
FIG. 15 is an exemplary diagram illustrating an enhancement layer bits-to-symbol for base layer 0x1;
FIG. 16 is an exemplary diagram showing the signal constellation of the layered modulator with respect to QPSK/QPSK hierarchical modulation;
FIG. 17 is an exemplary diagram illustrating the signal constellation of the layered modulator with respect to 16QAM/QPSK hierarchical modulation;
FIG. 18 is an exemplary diagram showing the signal constellation for the layered modulator with QPSK/QPSK hierarchical modulation;

FIG. 19 is an exemplary diagram illustrating the signal constellation of the layered modulator with respect to 16QAM/QPSK hierarchical modulation;

FIG. 20 is an exemplary diagram illustrating signal constellation for layered modulation with QPSK base layer and QPSK enhancement layer;

FIG. 21 is an exemplary diagram illustrating the signal constellation of the layered modulator with respect to 16QAM/QPSK hierarchical modulation;

FIG. 22 is an exemplary diagram illustrating Gray mapping for rotated QPSK/QPSK hierarchical modulation;

FIG. 23 is an exemplary diagram illustrating an enhanced QPSK/QPSK hierarchical modulation;

FIG. 24 is an exemplary diagram illustrating a new QPSK/QPSK hierarchical modulation;

FIG. 25 is another exemplary diagram illustrating a new QPSK/QPSK hierarchical modulation; and

FIG. 26 is an exemplary diagram illustrating a new bit-to-symbol block.

## BEST MODE FOR CARRYING OUT THE INVENTION

Reference will now be made in detail to the preferred embodiments of the present invention, examples of which are illustrated in the accompanying drawings. Wherever possible, the same reference numbers will be used throughout the drawings to refer to the same or like parts.

An orthogonal frequency division multiplexing (OFDM) is a digital multi-carrier modulation scheme, which uses a large number of closely-spaced orthogonal sub-carriers. Each sub-carrier is usually modulated with a modulation scheme (e.g., quadrature phase shift keying (QPSK)) at a low symbol rate while maintaining data rates similar to conventional single-carrier modulation schemes in the same bandwidth.

The OFDM originally does not have frequency diversity effect, but it can obtain frequency diversity effect by use of forward error correction (FEC) even in a distributed mode. That is, the frequency diversity effect becomes low when the channel coding rate is high.

In view of this, multi-carrier code division multiplexing (MC-CDM) or a multi-carrier code division multiple access (MC-CDMA) with advanced receiver can be used to compensate for low frequency diversity effect due to high channel coding rate.

The MC-CDM or MC-CDMA is a multiple access scheme used in OFDM-based system, allowing the system to support multiple users at the same time. In other words, the data can be spread over a much wider bandwidth than the data rate, a signal-to-noise and interference ratio can be minimized.

For example, with respect to signal processing, a channel response for each OFDM tone (or signal or sub-carrier) can be modeled as identical independent complex Gaussian variable. By doing so and using MC-CDM, diversity gain and processing gain can be attained. Here, interference, such as inter-symbol interference (ISI) or multiples access interference (MAI), is temporarily omitted in part due to the cyclic prefix or zero padding employed by OFDM or MC-CDM.

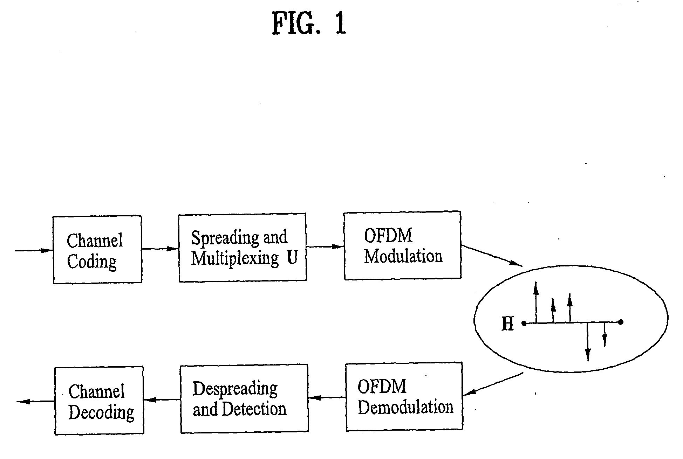

Figure 1 is an exemplary diagram of a generalized MC-CDM structure. Referring to Figure 1, $\tilde{\mathbf{H}} = \begin{bmatrix} \tilde{h}_1 & \\ & \tilde{h}_2 \end{bmatrix}$ denotes the frequency response of fading channel, where $\tilde{h}_1$ is a complex Gaussian variable for the frequency-domain channel response of each sub-carrier. Furthermore, without loss of the generality, $\mathbf{U}_2 = \begin{bmatrix} \alpha & \beta \\ -\beta^{\bullet} & \alpha^{*} \end{bmatrix}$ denote the unitary symbol precoding matrix with power constraint $|\alpha|^2 + |\beta|^2 = 1$. It can be taken a generalization of the classic MC-CDM.

The processes of Figure 1 include channel coding followed by spreading and multiplexing (which can be represented by U). Thereafter, the multiplexed data is modulated by using the OFDM modulation scheme.

At the receiving end, the OFDM modulated symbols are demodulated using OFDM demodulation scheme. They are then despread and detected, followed by channel decoding.

Further to the generalized MC-CDM structure, other structures are available such as rotated MC-CDM, OFDM, rotational OFDM (R-OFDM), or Walsh-Hadamard MC-CDM.

With respect to rotated MC-CDM, if $\alpha = \cos(\theta_1)$ and $\beta = \sin(\theta_1)$, then a real-value rotation matrix can be available as follows in Equation 1.

**[Equation 1]**

$$\mathbf{R}_2\left(\theta_i\right) = \begin{bmatrix} \cos\left(\theta_i\right) & \sin\left(\theta_i\right) \\ -\sin\left(\theta_i\right) & \cos\left(\theta_i\right) \end{bmatrix}$$

$$\mathbf{R}_2^{-1}\left(\theta_i\right) = \mathbf{R}_2^{H}\left(\theta_i\right) = \begin{bmatrix} \cos\left(\theta_i\right) & -\sin\left(\theta_i\right) \\ \sin\left(\theta_i\right) & \cos\left(\theta_i\right) \end{bmatrix}$$

Furthermore, with respect to OFDM, if $\alpha\beta=0$ or $\alpha\beta^* = 0$, then $\mathbf{U}_2$ becomes $\mathbf{I}_2$. In other words, $\mathbf{U}_2$ becomes uncoded OFDM or uncoded OFDMA. In addition, with respect to Walsh-Hadamard MC-CDM, if $\alpha = \cos\left(\frac{\pi}{4}\right) = \frac{\sqrt{2}}{2}$ and $\beta = \sin\left(\frac{\pi}{4}\right) = \frac{\sqrt{2}}{2}$, $\mathbf{U}_2 = \mathbf{R}_2$ become a classic Walsh-Hadamard matrix.

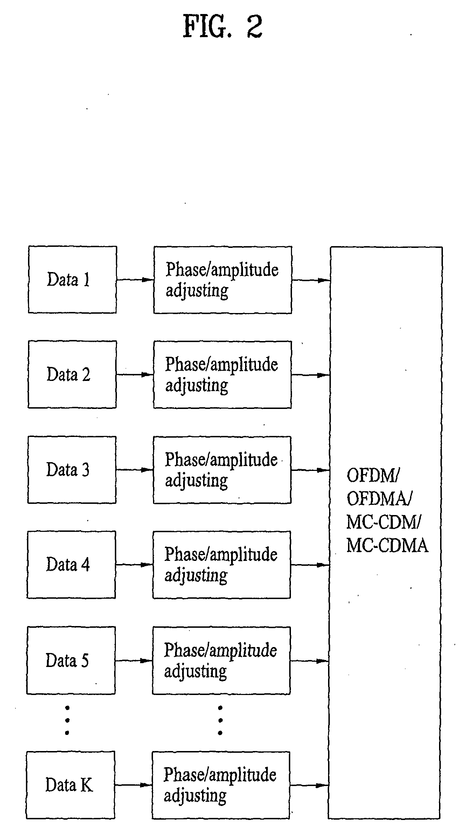

Figure 2 is another exemplary diagram of a generalized MC-CDM structure. In Figure 2, a plurality of data are inputted which are then precoded and/or rotated. Here, the precoding or rotation also can signify adjustment of the amplitude and/or phase of incoming data.

With respect to precoding/rotation, different tones or sub-carriers may be precoded/rotated independently or jointly. Here, the joint precoding/rotation of the incoming data or data streams can be performed by using a single rotation matrix. Alternatively, different incoming data or data streams can be separated into multiple groups, where each group of data streams can be precoded/rotated independently or jointly.

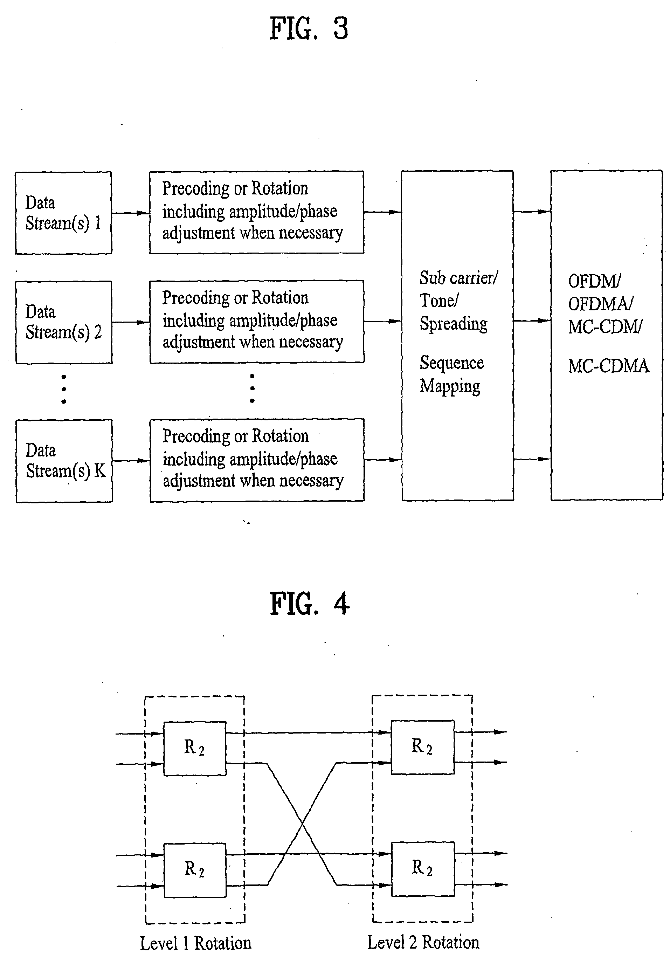

Figure 3 is an exemplary diagram illustrating a generalized MC-CDM structure in which precoding/rotation is performed on groups. Referring to Figure 3, multiple data or data streams are grouped into Data Stream(s) 1, 2,..., K groups which are then precoded/rotated per group. Here, the precoding/rotation can include amplitude and/or phase adjustment, if necessary. Thereafter, the precoded/rotated symbols are mapped.

Further, different rotation/precoding on different groups may lead to a mixture of OFDM, MC-CDM or R-OFDM. In addition, the rotation/precoding of each group may be based on the QoS requirement, the receiver profile, and/or the channel condition.

Alternatively, instead of using a big precoding/rotation matrix, a smaller-sized precoding/rotation matrix can be dependently or independently applied to different groups of incoming data streams.

In operation, actual precoding/rotation operation can be performed in multiple stages. Figure 4 is an exemplary diagram illustrating a multi-stage rotation. Referring to Figure 4, multiple data or data streams are inputted which are then precoded/rotated. Here, these processed symbols can be grouped into at least two groups. Each group is represented by at least one symbol.

With respect to rotation of the symbols, the symbol(s) of each group can be spread using a spreading matrix. Here, the spreading matrix that is applied to a group may be different and can be configured. After the symbols are processed through the spreading matrix, then the output(s) can be re-grouped into at least two groups. Here, the re-grouped outputs comprise at least one selected output from each of the at least two groups.

Thereafter, these re-grouped outputs can be spread again using the spreading matrix. Again, the spreading matrix that is applied to a group may be different and can be configured. After the outputs are processed through another spreading matrix, they are inputted to an inverse fast Fourier transform (IFFT).

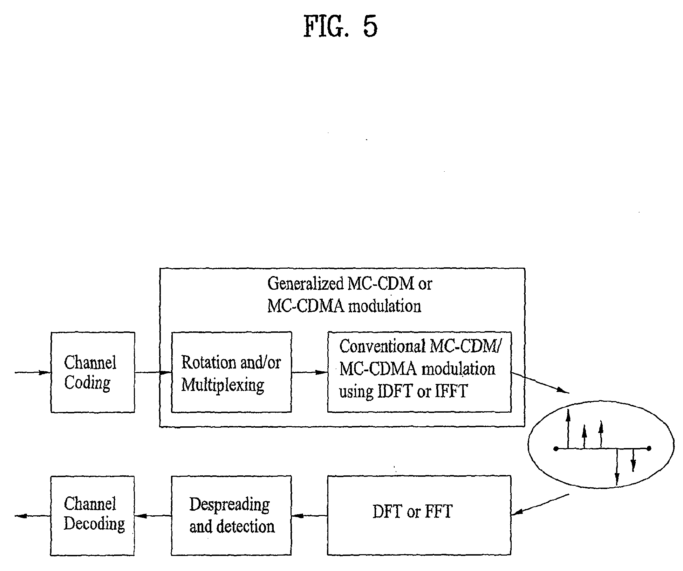

A rotation scheme such as the multi-stage rotation can also be employed by a generalized MC-CDM or multi-carrier code division multiple access (MC-CDMA). Figure 5 is an exemplary diagram illustrating a general block of the MC-CDM.

Figure 5 is another exemplary diagram of a generalized MC-CDM structure. More specifically, the processes as described with respect to Figure 5 are similar to those of Figure 1 except that Figure 5 is based on generalized MC-CDM or MC-CDMA that uses rotation (e.g., multi-stage rotation). Here, after channel coding, the coded data are rotated and/or multiplexed, followed by modulation using inverse discrete Fourier transform (IDFT) or IFFT.

At the receiving end, the modulated symbols are demodulated using discrete Fourier transform (DFT) or fast Fourier transform (FFT). They are then despread and detected, followed by channel decoding.

In addition, interlacing is available in the generalized MC-CDM. In 1x evolution data optimized (1xEV-DO) BCMCS and enhanced BCMCS (EBCMCS), the multipath delay spread is about $T_d = 3.7\mu s$ and the coherent bandwidth is around $B_c = \dfrac{1}{T_d} = 270\text{kHz}$. Therefore, the maximum frequency diversity order is $d = \dfrac{B}{B_c} = \dfrac{1.25}{0.27} \approx 5$. This means, in order to capture the maximum frequency diversity here, the MC-CDM spreading gain $L \geq 5$ is possibly enough.

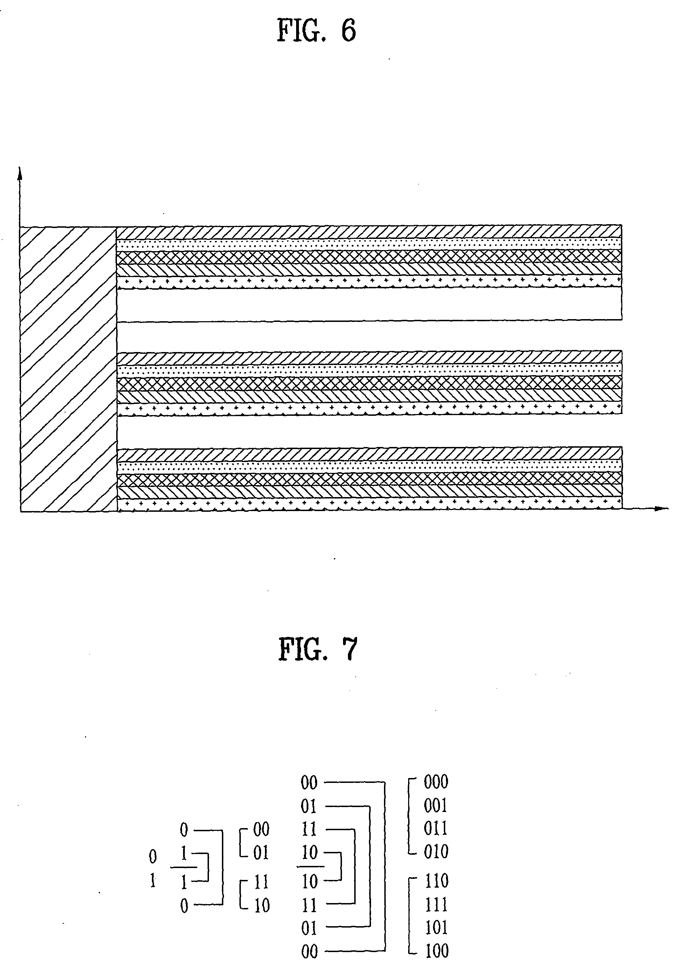

Based on the above analysis, a frequency-domain interlaced MC-CDM can be used. Figure 6 is an exemplary diagram illustrating frequency-domain interlaced MC-CDM. Referring to Figure 6, each slot, indicated by different fills, can be one tone (or sub-carrier) or multiple consecutive tones (or sub-carriers).

The tone(s) or sub-carrier(s) or symbol(s) can be rotated differently. In other words, the product distance, which can be defined as the product of Euclidean distances, can be maximized. In detail, a minimum product distance, which is used for optimizing modulation diversity, can be shown by the following equation. The minimum product distance can also be referred to as Euclidean distance minimization.

**[Equation 3]**

$$D_p = \min_{i \neq j,\, s_i \in A} \prod \left| \mathbf{s}_i - \mathbf{s}_j \right|$$

Referring to Equation 3, $\mathbf{s}_i \in A$ denotes the transmitted symbols. Furthermore, optimization with maximizing the minimum production distance can be done by solving the following equation.

**[Equation 4]**

$$\mathbf{U}_2\left(e^{j\phi}\right) = \arg\max_{\mathbf{U}} D_p = \arg\max_{\mathbf{U}} \min \prod_{i \neq j,\, s_i \in A} \left| \mathbf{U}\mathbf{s}_i - \mathbf{U}\mathbf{s}_j \right|$$

Referring to Equation 4, $\mathbf{U}_2\left(e^{j\phi}\right) = \begin{bmatrix} \alpha & \alpha e^{j\phi} \\ -\alpha^* e^{-j\phi} & \alpha^* \end{bmatrix}$.

For example, for the traditional quadrature phase shift keying (QPSK), $\mathbf{U}_2$ ($e^{j\phi}$) can be decided by calculating $d\left(e^{j\phi}\right) = \frac{1}{2}\left| \Delta_1^2 - \left(e^{j\phi}\Delta_2\right)^2 \right|$ where $\Delta_{1,2} \in \{\pm 1,\ \pm j,\ \pm 1 \pm j\}$.

As discussed, each tone or symbol can be rotated differently. For example, a first symbol can be applied QPSK, a second symbol can be applied a binary phase shift keying (BPSK), and $n^{th}$ symbol can be applied 16 quadrature amplitude modulation (16QAM). To put differently, each tone or symbol has different modulation angle.

In rotation OFDM/MC-CDM (R-OFDM/MC-CDM),

$\hat{\mathbf{H}} = \tilde{\mathbf{H}}\mathbf{U}_2 = \begin{bmatrix} \tilde{h}_1 & \\ & \tilde{h}_2 \end{bmatrix}\begin{bmatrix} \alpha & \beta \\ -\beta^* & \alpha^* \end{bmatrix} = \begin{bmatrix} \tilde{h}_1\alpha & \tilde{h}_1\beta \\ -\tilde{h}_2\beta^* & \tilde{h}_2\alpha^* \end{bmatrix}$. For rotated MC-CDM, the combined frequency-domain channel response matrix can be as shown in Equation 5.

**[Equation 5]**

$$\hat{\mathbf{H}}\left(\theta_1\right) = \tilde{\mathbf{H}}\mathbf{R}_2\left(\theta_1\right) = \begin{bmatrix} \tilde{h}_1 & \\ & \tilde{h}_2 \end{bmatrix}\begin{bmatrix} \cos\left(\theta_1\right) & \sin\left(\theta_1\right) \\ -\sin\left(\theta_1\right) & \cos\left(\theta_1\right) \end{bmatrix} = \begin{bmatrix} \tilde{h}_1\cos\left(\theta_1\right) & \tilde{h}_1\sin\left(\theta_1\right) \\ -\tilde{h}_2\sin\left(\theta_1\right) & \tilde{h}_2\cos\left(\theta_1\right) \end{bmatrix}$$

The effect of the transform can be illustrated in a correlation matrix of Equation 6.

[Equation 6]

$$\mathbf{C} = \hat{\mathbf{H}}^{-H}\mathbf{H}$$

$$= \begin{bmatrix} \tilde{h}_1^*\alpha^* & -\tilde{h}_2^*\beta \\ \tilde{h}_1^*\beta^* & \tilde{h}_2^*\alpha^* \end{bmatrix} \begin{bmatrix} \tilde{h}_1\alpha & \tilde{h}_1\beta \\ -\tilde{h}_2\beta^* & \tilde{h}_2\alpha^* \end{bmatrix}$$

$$= \begin{bmatrix} |\tilde{h}_1|^2|\alpha|^2 + |\tilde{h}_2|^2|\beta|^2 & \left(|\tilde{h}_1|^2 - |\tilde{h}_2|^2\right)\alpha^*\beta \\ \left(-|\tilde{h}_1|^2 - |\tilde{h}_2|^2\right)\alpha\beta^* & |\tilde{h}_2|^2|\alpha|^2 + |\tilde{h}_1|^2|\beta|^2 \end{bmatrix}$$

$$= \mathbf{D} + \mathbf{I}$$

$$= \begin{bmatrix} |\tilde{h}_1|^2|\alpha|^2 + |\tilde{h}_2|^2|\beta|^2 & 0 \\ 0 & |\tilde{h}_2|^2|\alpha|^2 + |\tilde{h}_1|^2|\beta|^2 \end{bmatrix} + \begin{bmatrix} 0 & \left(|\tilde{h}_1|^2 - |\tilde{h}_2|^2\right)\alpha^*\beta \\ \left(-|\tilde{h}_1|^2 - |\tilde{h}_2|^2\right)\alpha\beta^* & 0 \end{bmatrix}$$

Referring to Equation 3, the diversity can be denoted by

$$\mathbf{D} = \begin{bmatrix} |\tilde{h}_1|^2|\alpha|^2 + |\tilde{h}_2|^2|\beta|^2 & 0 \\ 0 & |\tilde{h}_2|^2|\alpha|^2 + |\tilde{h}_1|^2|\beta|^2 \end{bmatrix},$$ and the interference matrix can be denoted by

$$\mathbf{I} = \begin{bmatrix} 0 & \left(|\tilde{h}_1|^2 - |\tilde{h}_2|^2\right)\alpha^*\beta \\ \left(-|\tilde{h}_1|^2 + |\tilde{h}_2|^2\right)\alpha\beta^* & 0 \end{bmatrix}.$$ Here, the interference matrix can be ISI or multiple access interference (MAI).

A total diversity of the generalized MC-CDM can be represented as shown in Equation 7.

[Equation 7]

$$D = \mathrm{Tr}\{\mathbf{D}\} = \mathrm{Tr}\left\{\begin{bmatrix} |\tilde{h}_1|^2|\alpha|^2 + |\tilde{h}_2|^2|\beta|^2 & 0 \\ 0 & |\tilde{h}_2|^2|\alpha|^2 + |\tilde{h}_1|^2|\beta|^2 \end{bmatrix}\right\} = |\tilde{h}_1|^2 + |\tilde{h}_2|^2$$

Referring to Equation 4, the total diversity of the generalized MC-CDM is independent on the precoding matrix U. However, for each symbol or user, the diversity gain may be different to each.

Further, the interference of the generalized MC-CDM can be represented as shown in Equation 8.

**[Equation 8]**

$$I = \mathrm{Tr}_2\{\mathbf{I}\} = \mathrm{Tr}_2\left\{\begin{bmatrix} 0 & \left(\left|\tilde{h}_1\right|^2 - \left|\tilde{h}_2\right|^2\right)\alpha^*\beta \\ \left(-\left|\tilde{h}_1\right|^2 + \left|\tilde{h}_2\right|^2\right)\alpha\beta^* & 0 \end{bmatrix}\right\} = 2\left|\left|\tilde{h}_1\right|^2 - \left|\tilde{h}_2\right|^2\right|\left|\alpha\beta^*\right| \le \left|\left|\tilde{h}_1\right|^2 - \left|\tilde{h}_2\right|^2\right|$$

Here, if $|\tilde{h}_1|^2 \ne |\tilde{h}_2|^2$ and $|\alpha\beta^*| \ne 0$, there is some self-interference or multi-user interference. In other words, due to frequency-selectivity in OFDM-liked orthogonal modulation, there is possible interference if some precoding or spreading is applied. Furthermore, it can be shown that this interference can be maximized when the rotation angel is $\theta = \dfrac{\pi}{4}$. 4

In designing a MC-CDM transceiver, inter alia, an inter-symbol or multiple access signal-to-interference ratio (SIR) can be defined as follows.

**[Equation 9]**

$$\mathrm{SIR}_1 = \frac{\left|\tilde{h}_1\right|^2|\alpha|^2 + \left|\tilde{h}_2\right|^2|\beta|^2}{\left|\left|\tilde{h}_1\right|^2 - \left|\tilde{h}_2\right|^2\right|\left|\alpha\beta^*\right|} \approx \frac{|\alpha|^2 + \gamma|\beta|^2}{|1-\gamma|\left|\alpha\beta^*\right|}$$

Referring to Equation 9, $\gamma = \dfrac{\tilde{h}_2^{\ 2}}{\tilde{h}_1^{\ 2}}$ denotes the channel fading difference. The SIR can be defined based on channel fading and rotation.

Rotation can also be performed based on receiver profile. This can be done through upper layer signaling. More specifically, at least two parameters can be configured, namely, spreading gain and rotation angle.

In operation, a receiver can send feedback information containing its optimum rotation angle and/or rotation index. The rotation angle and/or rotation index can be mapped to the proper rotation angle by a transmitter based on a table (or index). This table or index is known by both the transmitter and the receiver. This can be done any time when it is the best time for the transmitter and/or receiver.

For example, if the receiver (or access terminal) is registered with the network, it usually sends its profile to the network. This profile includes, inter alia, the rotation angle and/or index.

Before the transmitter decides to send signals to the receiver, it may ask the receiver as to the best rotation angle. In response, the receiver can send the best rotation angle to the transmitter. Thereafter, the transmitter can send the signals based on the feedback information and its own decision.

During transmission of the signals, the transmitter can periodically request from the receiver to send its updated rotation angle. Alternatively, the transmitter can request an update of the rotation angle from the receiver after the transmitter is finished transmitting.

At any time, the receiver can send the update (or updated rotation angle) to the transmitter. The transmission of the update (or feedback information) can be executed through an access channel, traffic channel, control channel, or other possible channels.

With respect to channel coding, coding can help minimize demodulation errors and therefore achieve the throughput in addition to signal design for higher spectral efficiency. In reality, most capacity-achieving codes are designed to balance the implementation complexity and achievable performance.

Gray code is one of an example of channel coding which is also known as reflective binary code. Gray code or the reflective binary code is a binary numeral system where two successive values differ in only one digit. Figure 7 is an exemplary diagram illustrating an example of Gray coding.

Gray code for bits-to-symbol mapping, also called Gray mapping, can be implemented with other channel coding scheme. Gray mapping is generally accepted as the optimal mapping rule for minimizing bit error rate (BER).

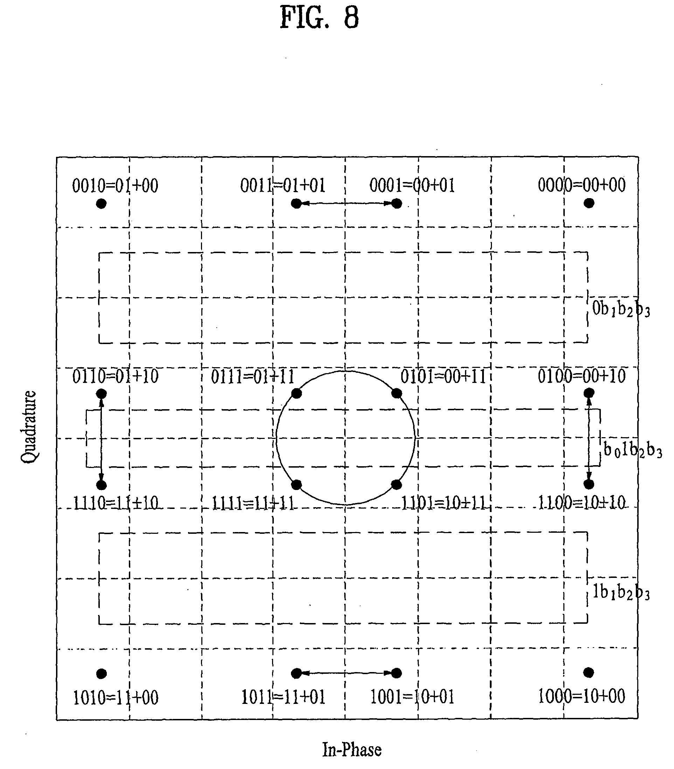

Gray mapping for regular QPSK/QPSK hierarchical modulation (or 16QAM modulation) is shown in Figure 8 where the codewords with minimum Euclid distance have minimum Hamming distance as well.

In the figures to follow, the Gray mapping rule is described. More specifically, each enhancement layer bits-to-symbol and base layer bits-to-symbol satisfy the Gray mapping requirement where the closest two symbols only have difference of one or the least bit(s). Furthermore, the overall bits-to-symbol mapping rule satisfies the Gray mapping rule.

Figure 8 is an exemplary diagram illustrating mapping for regular QPSK/QPSK hierarchical modulation or 16QAM modulation. Referring to Figure 8, the enhancement layer bits and the base layer bits can be arbitrarily combined so that every time when the base layer bits are detected, the enhancement layer bits-to-symbol mapping table/rule can be decided, for example. In addition, both the base layer and the enhancement layer are QPSK. Furthermore, every point (or symbol) is represented and/or mapped by $b_0b_1b_2b_3$.

More specifically, the circle in the center of the diagram and the lines connecting two (2) points (or symbols) (e.g., point 0011 and point 0001 or point 0110 and point 1110) represent connection with only one bit difference between neighbors. Here, the connected points are from different layers. In other words, every connected points (or symbol) are different base layer bits and enhancement layer bits.

Furthermore, every point can be represented by four (4) bits (e.g., $b_0b_1b_2b_3$) in which the first bit ($b_0$) and the third bit ($b_2$) represent the base layer bits, and the second bit ($b_1$) and the fourth bit ($b_3$) represent the enhancement bits. That is, two (2) bits from the base layer and the two (2) bits from the enhancement layer are interleaved together to represent every resulted point. By interleaving the bits instead of simple concatenation of the bits from two layers, additional diversity gain can be potentially attained.

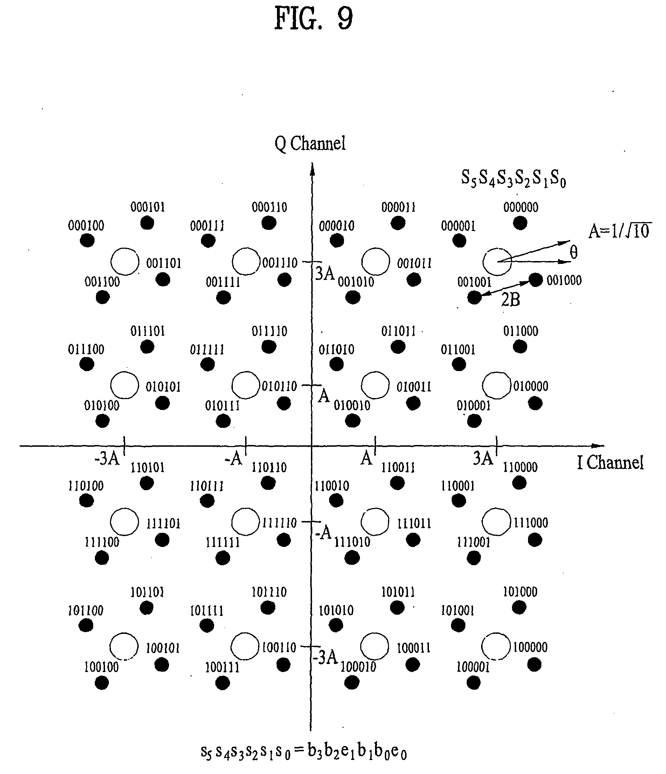

Figure 9 is an exemplary diagram illustrating bits-to-symbol mapping for 16QAM/QPSK. This figure refers to bits-to-symbol mapping. This mapping can be used by both the transmitter and the receiver.

If a transmitter desires to send bits $b_0b_1b_2b_3b_4b_5$, the transmitter needs to look for a mapped symbol to send. Hence, if a receiver desires to demodulate the received symbol, the receiver can use this figure to find/locate the demodulated bits.

Furthermore, Figure 9 represents 16QAM/QPSK hierarchical modulation. In other words, the base layer is modulated by 16QAM, and the enhancement layer is modulated by QPSK. Moreover, 16QAM/QPSK can be referred to as a special hierarchical modulation. In other words, the base layer signal and the enhancement signal have different initial phase. For example, the base layer signal phase is 0 while the enhancement layer signal phase is theta ($\theta$).

Every symbol in Figure 9 is represented by bits sequence, $s_5s_4s_3s_2s_1s_0$, in which bits $s_3$ and $s_0$ are bits from the enhancement layer while the other bits (e.g., $s_5$, $s_4$, $s_2$, and $s_1$) belong to the base layer.

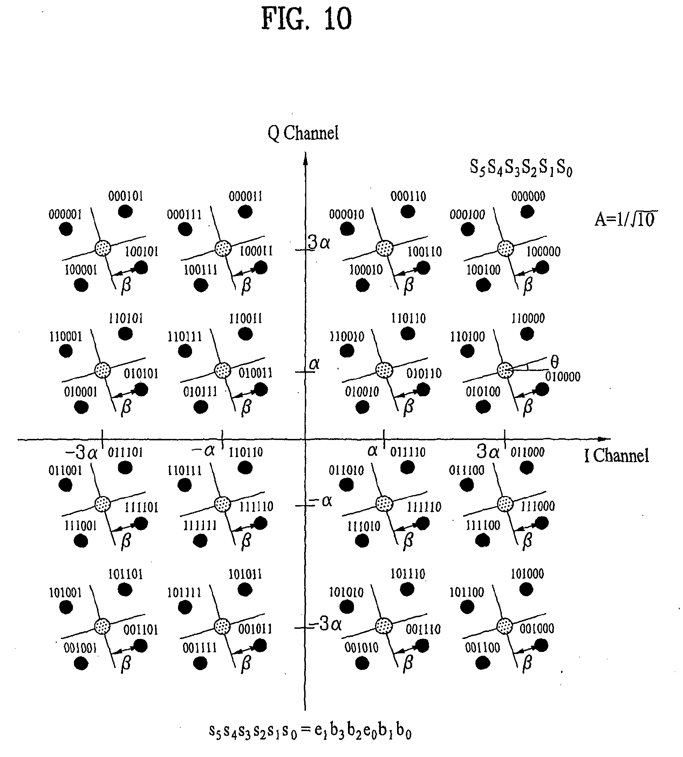

Figure 10 is another exemplary diagram illustrating bits-to-symbol mapping for 16QAM/QPSK. The difference between Figure 10 and previous Figure 9 is that every symbol in Figure 10 is represented by bits sequence, $s_5s_4s_3s_2s_1s_0$, in which bits $s_5$ and $s_2$ are bits from the enhancement layer while the other bits (e.g., $s_4$, $s_3$, $s_1$, and $s_0$) are from the base layer.

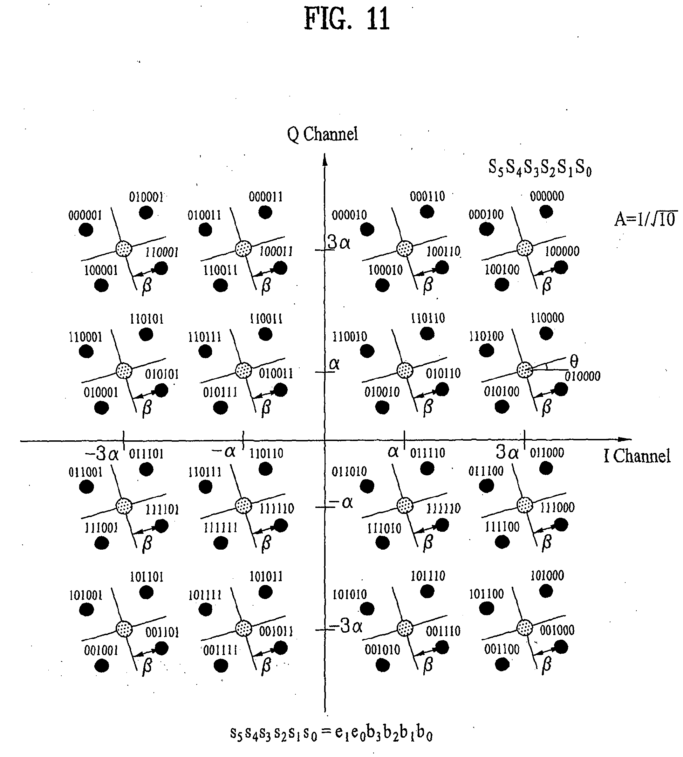

Figure 11 is another exemplary diagram illustrating bits-to-symbol mapping for 16QAM/QPSK. The difference between Figure 11 and previous Figures 9 and/or 10 is that every symbol in Figure 11 is represented by bits sequence, $s_5s_4s_3s_2s_1s_0$, in which bits $s_5$ and $s_4$ are bits from the enhancement layer while the other bits (e.g., $s_3$, $s_2$, $s_1$, and $s_0$) are from the base layer.

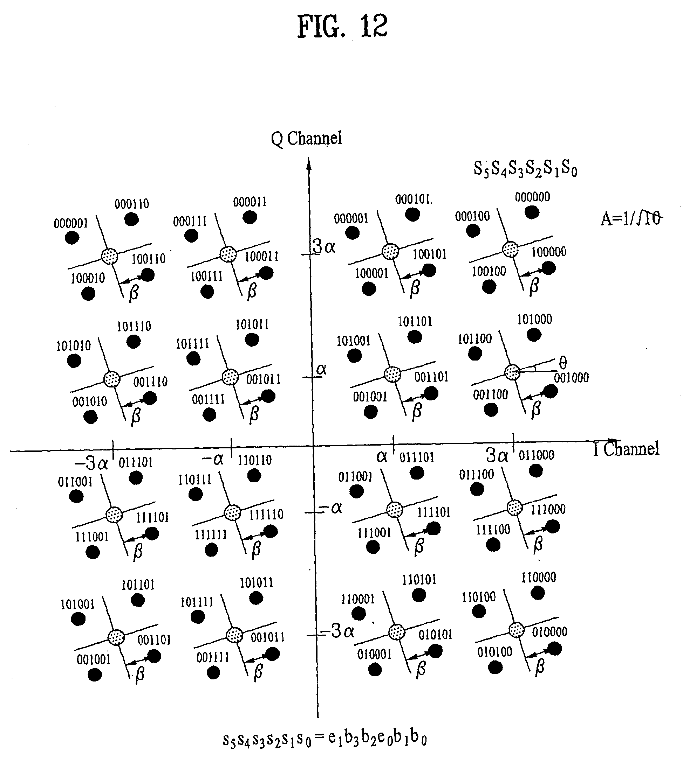

Figure 12 is another exemplary diagram illustrating bits-to-symbol mapping for 16QAM/QPSK. The difference between Figure 12 and previous Figures 9, 10, and/or 11 bits $s_5$ and $s_2$ are bits from the enhancement layer while the other bits (e.g., $s_4$, $s_3$, $s_1$, and $s_0$) are from the base layer. As before, every symbol in Figure 12 is represented by bits sequence, $s_5s_4s_3s_2s_1s_0$.

Further to bits sequence combinations as discussed above, the following hierarchical layer and enhancement layer combination possibilities include (1) $s_5s_4s_3s_2s_1s_0 = b_3b_2b_1e_1b_0e_0$, (2) $s_5s_4s_3s_2s_1s_0 = b_3e_1b_2b_1b_0e_0$, (3) $s_5s_4s_3s_2s_1s_0 = b_3b_2b_1b_0e_0e_1$, (4) $s_5s_4s_3s_2s_1s_0 = e_0e_1b_3b_2b_1b_0$, (5) $s_5s_4s_3s_2s_1s_0 = e_0b_3b_2e_1b_1b_0$, (6) $s_5s_4s_3s_2s_1s_0 = b_3b_2e_0b_1b_0e_1$, (7) $s_3s_2s_1s_0 = e_1b_1e_0b_0$, (8) $s_3s_2s_1s_0 = e_0b_1e_1b_0$, (9) $s_3s_2s_1s_0 = e_1e_0b_1b_0$, (10) $s_3s_2s_1s_0 = e_0e_1b_1b_0$, and (11) $s_3s_2s_1s_0 = b_1b_0e_0e_1$.

In addition to the combinations discussions of above, there are many other possible combinations. However, they all follow the same rule which is the Gray rule or the Gray mapping rule. As discussed, each enhancement layer bits-to-symbol mapping and base layer bits-to-symbol mapping satisfy the Gray mapping rule requirement which is that the closest two symbols only have difference of one bit or less. Moreover, the overall bits-to-symbol mapping rule satisfies the Gray mapping rule as well.

Further, the enhancement layer bits and the base layer bits can be arbitrarily combined so that every time the base layer bits are detected, the enhancement layer bits-to-symbol mapping table/rule can be decided. In addition, it is possible, for example, for $s_3s_2s_1s_0 = e_0e_1b_1b_0$ QPSK/QPSK, the Gray mapping rule for enhancement layer $s_3s_211 = e_1e_011$ to be not the exactly the same as $s_3s_210 = e_1e_010$. Moreover, for example, it is possible $s_3s_211 = e_1e_a11$ is a rotated version as $s_3s_210 = e_1e_010$, $s_3s_211 = 111$'s position is the position of $s_3s_211 = 1010$ or $s_3s_211 = 0110$.

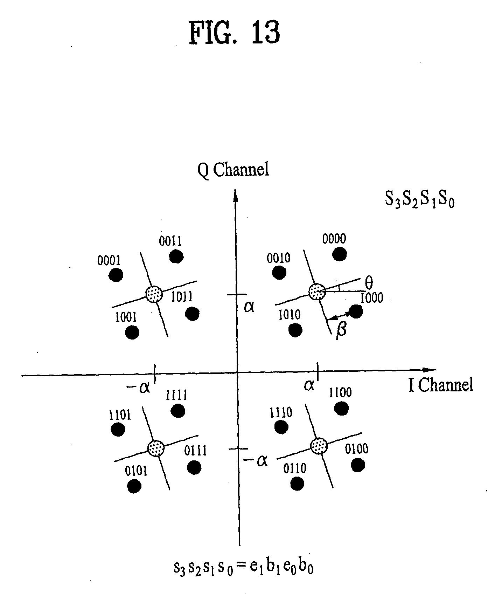

Figure 13 is an exemplary diagram illustrating bits-to-symbol mapping for QPSK/QPSK. Referring to Figure 13, the bits-to-symbol mapping can be used by both the transmitter and the receiver. If a transmitter desires to send bits $b_0b_1b_2b_3$, the transmitter needs to look for a mapped symbol to send. Hence, if a receiver desires to demodulate the received symbol, the receiver can use this figure to find/locate the demodulated bits.

Furthermore, Figure 13 represents QPSK/QPSK hierarchical modulation. In other words, the base layer is modulated by QPSK, and the enhancement layer is also modulated by QPSK. Moreover, QPSK/QPSK can be referred to as a special hierarchical modulation. That is, the base layer signal and the enhancement signal have different initial phase. For example, the base layer signal phase is 0 while the enhancement layer signal phase is theta ($\theta$).

Every symbol in Figure 13 is represented by bits sequence, $s_3s_2s_1s_0$, in which bits $s_3$ and $s_1$ are bits from the enhancement layer while the other bits (e.g., $s_2$ and $s_0$) belong to the base layer.

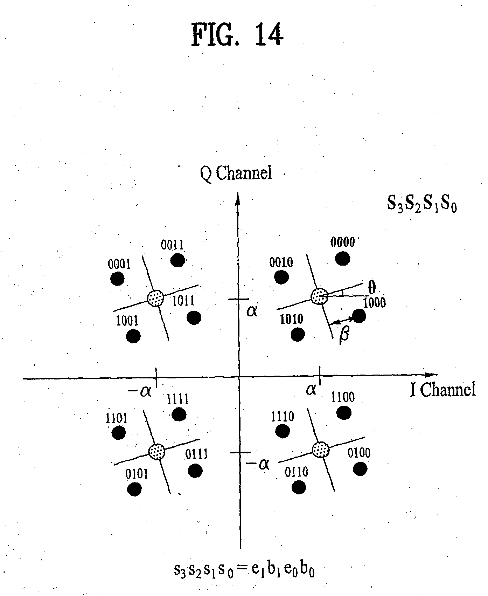

Further, in the QPSK/QPSK example, the enhancement layer bits-to-symbol mapping rules may be different from the base layer symbol-to-symbol. Figure 14 is an exemplary diagram illustrating an enhancement layer bits-to-symbol for base layer 0x0. In other words, Figure 14 illustrates an example of how the base layer bits are mapped.

For example, the symbols indicated in the upper right quadrant denote the base layer symbols of '00'. This means that as long as the base layer bits are '00', whatever the enhancement layer is, the corresponding layer modulated symbol is one of the four (4) symbols of this quadrant.

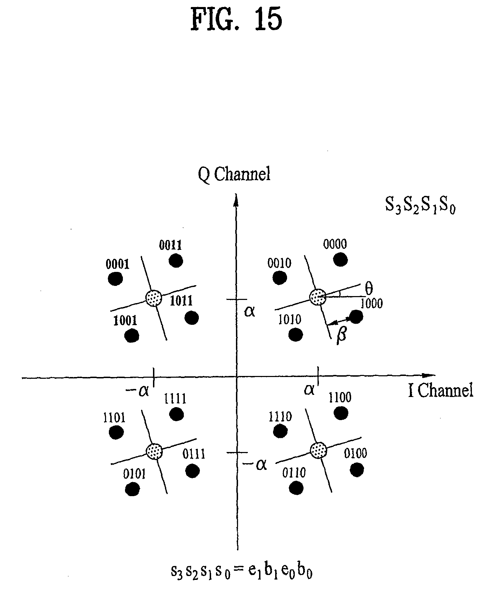

Figure 15 is an exemplary diagram illustrating an enhancement layer bits-to-symbol for base layer 0x1. Similarly, this diagram illustrates another example of how the base layer bits are mapped. For example, the symbols of in the upper left quadrant denote the base layer symbols of '01'. This means that as long as the base layer bits are '01', whatever the enhancement layer bits are, the corresponding layer modulated symbols is one of the symbols of the upper left quadrant.

As discussed above with respect to Figures 1-3, the inputted data or data stream can be channel coded using the Gray mapping rule, for example, followed by other processes including modulation. The modulation discussed here refers to layered (or superposition) modulation. The layered modulation is a type of modulation in which each modulation symbol has bits corresponding to both a base layer and an enhancement layer. In the discussions to follow, the layered modulation will be described in the context of broadcast and multicast services (BCMCS).

In general, layered modulation can be a superposition of any two modulation schemes. In BCMCS, a QPSK enhancement layer is superposed on a base QPSK or 16-QAM layer to obtain the resultant signal constellation. The energy ratio $r$ is the power ratio between the base layer and the enhancement. Furthermore, the enhancement layer is rotated by the angle $\theta$ in counter-clockwise direction.

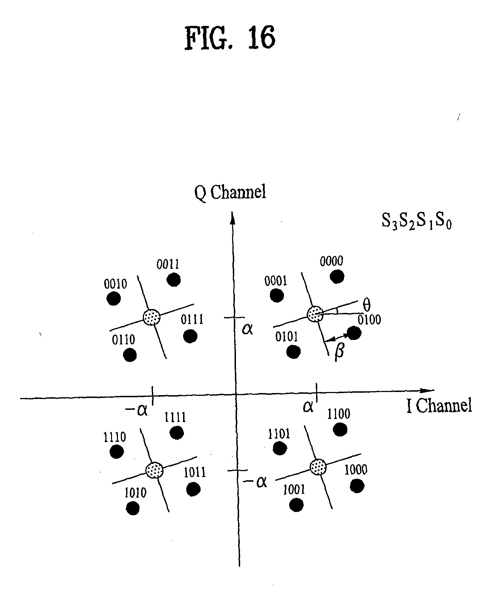

Figure 16 is an exemplary diagram showing the signal constellation of the layered modulator with respect to QPSK/QPSK hierarchical modulation. Referring to QPSK/QPSK hierarchical modulation, which means QPSK base layer and QPSK enhancement layer, each modulation symbol contains four (4) bits, namely, $s_3$, $s_2$, $s_1$, $s_0$. Here, there are two (2) most significant bits (MSBs) which are $s_3$ and $s_2$, and two (2) least significant bits (LSBs) which are $s_1$ and $s_0$. The two (2) MSBs are from the base layer and the two LSBs come from the enhancement layer.

Given energy ratio $r$ between the base layer and enhancement layer, $\alpha = \sqrt{\dfrac{r}{2(1+r)}}$ and $\beta = \sqrt{\dfrac{1}{2(1+r)}}$

can be defined such that $2(\alpha^2+\beta^2)=1$. Here, $\alpha$ denotes the amplitude of the base layer, and $\beta$ denotes the amplitude of enhancement layer. Moreover, $2(\alpha^2+\beta^2)=1$ is a constraint which is also referred to as power constraint and more accurately referred to as normalization.

Table 1 illustrates a layered modulation table with QPSK base layer and QPSK enhancement layer.

**[Table 1]**

| Modulator Input Bits | | | | Modulation Symbols | |
|---|---|---|---|---|---|
| $s_3$ | $s_2$ | $s_1$ | $s_0$ | $m_I(k)$ | $m_Q(k)$ |
| 0 | 0 | 0 | 0 | $\alpha + \sqrt{2}\cos(\theta + \pi/4)\beta$ | $\alpha + \sqrt{2}\sin(\theta + \pi/4)\beta$ |
| 0 | 0 | 0 | 1 | $\alpha + \sqrt{2}\cos(\theta + 3\pi/4)\beta$ | $\alpha + \sqrt{2}\sin(\theta + 3\pi/4)\beta$ |
| 0 | 1 | 0 | 1 | $\alpha + \sqrt{2}\cos(\theta + 7\pi/4)\beta$ | $\alpha + \sqrt{2}\sin(\theta + 7\pi/4)\beta$ |
| 0 | 1 | 0 | 0 | $\alpha + \sqrt{2}\cos(\theta + 5\pi/4)\beta$ | $\alpha + \sqrt{2}\sin(\theta + 5\pi/4)\beta$ |

(continued)

| Modulator Input Bits | | | | Modulation Symbols | |
|---|---|---|---|---|---|
| $s_3$ | $s_2$ | $s_1$ | $s_0$ | $m_I(k)$ | $m_Q(k)$ |
| 0 | 0 | 1 | 1 | $-\alpha + \sqrt{2}\cos(\theta + \pi/4)\beta$ | $\alpha + \sqrt{2}\sin(\theta + \pi/4)\beta$ |
| 0 | 0 | 1 | 0 | $-\alpha + \sqrt{2}\cos(\theta + 3\pi/4)\beta$ | $\alpha + \sqrt{2}\sin(\theta + 3\pi/4)\beta$ |
| 0 | 1 | 1 | 0 | $-\alpha + \sqrt{2}\cos(\theta + 7\pi/4)\beta$ | $\alpha + \sqrt{2}\sin(\theta + 7\pi/4)\beta$ |
| 0 | 1 | 1 | 1 | $-\alpha + \sqrt{2}\cos(\theta + 5\pi/4)\beta$ | $\alpha + \sqrt{2}\sin(\theta + 5\pi/4)\beta$ |
| 1 | 1 | 0 | 0 | $\alpha + \sqrt{2}\cos(\theta + \pi/4)\beta$ | $-\alpha + \sqrt{2}\sin(\theta + \pi/4)\beta$ |
| 1 | 1 | 0 | 1 | $\alpha + \sqrt{2}\cos(\theta + 3\pi/4)\beta$ | $-\alpha + \sqrt{2}\sin(\theta + 3\pi/4)\beta$ |
| 1 | 0 | 0 | 1 | $\alpha + \sqrt{2}\cos(\theta + 7\pi/4)\beta$ | $-\alpha + \sqrt{2}\sin(\theta + 7\pi/4)\beta$ |
| 1 | 0 | 0 | 0 | $\alpha + \sqrt{2}\cos(\theta + 5\pi/4)\beta$ | $-\alpha + \sqrt{2}\sin(\theta + 5\pi/4)\beta$ |
| 1 | 1 | 1 | 1 | $-\alpha + \sqrt{2}\cos(\theta + \pi/4)\beta$ | $-\alpha + \sqrt{2}\sin(\theta + \pi/4)\beta$ |
| 1 | 1 | 1 | 0 | $-\alpha + \sqrt{2}\cos(\theta + 3\pi/4)\beta$ | $-\alpha + \sqrt{2}\sin(\theta + 3\pi/4)\beta$ |
| 1 | 0 | 1 | 0 | $-\alpha + \sqrt{2}\cos(\theta + 7\pi/4)\beta$ | $-\alpha + \sqrt{2}\sin(\theta + 7\pi/4)\beta$ |
| 1 | 0 | 1 | 1 | $-\alpha + \sqrt{2}\cos(\theta + 5\pi/4)\beta$ | $-\alpha + \sqrt{2}\sin(\theta + 5\pi/4)\beta$ |

Referring to Table 1, each column defines the symbol position for each four (4) bits, $s_3$, $s_2$, $s_1$, $s_0$. Here, the position of each symbol is given in a two-dimensional signal space $(m_I, m_Q)$. This means that each symbol can be represented by $S(t)=\lfloor M_I\cos(2\pi f_0 t+\phi_0)+M_Q *\sin(2\pi f_0 t+\phi_0)\rfloor \phi(t)$. Simply put, the complex modulation symbol $S = (m_I, m_Q)$ for each $[s_3, s_2, s_1, s_0]$ is specified in $S(t) = \lfloor M_I \cos(2\pi f_0 t + \phi_0) + M_Q *\sin(2\pi f_0 t +\phi_0)\rfloor(t)$.

Here, $\cos(2\pi f_0 t+ \phi_0)$ and $\sin(2\pi f_0 t+\phi_0)$ denote the carrier signal with initial phase $\phi_0$ and carrier frequency $f_0$. Moreover, $\varphi(t)$ denotes the pulse-shaping, the shape of a transmit symbol.

In the above definition of $S(t)$, except the $m_I$ and $m_Q$ value, other parameters can usually either be shared between the transmitter and the receiver or be detected by the receiver itself. For correctly demodulating $S(t)$, it is necessary to define and share the possible value information of $m_I$ and $m_Q$.

The possible value of $m_I(k)$ and $m_Q(k)$, which denote the $m_I$ and $m_Q$ value for the $k^{th}$ symbol, are given in Table 1. It shows for representing each group inputs bits $s_3$, $s_2$, $s_1$, $s_0$ the symbol shall be modulated by corresponding parameters shown in the table.

The discussion with respect to the complex modulation symbol can be applied in a similar or same manner to the following discussions of various layered modulations. That is, the above discussion of the complex modulation symbol can be applied to the tables to follow.

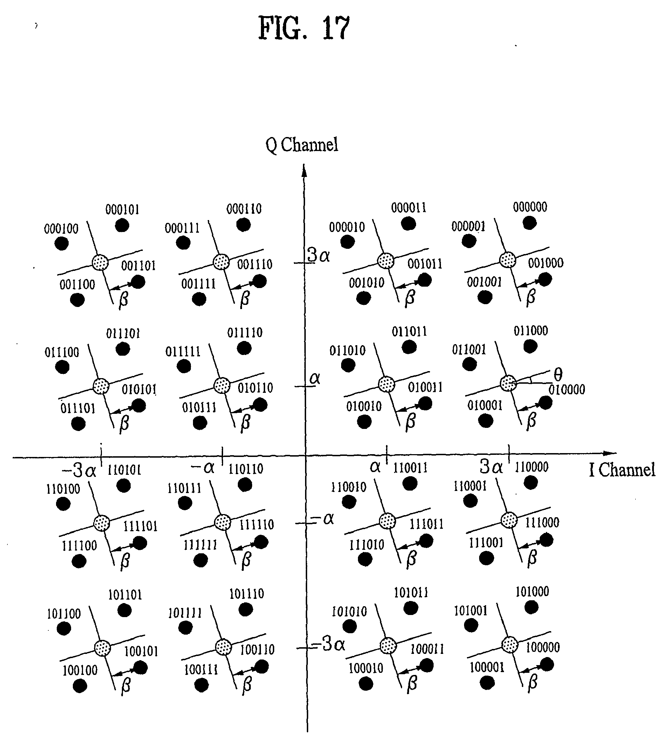

Figure 17 is an exemplary diagram illustrating the signal constellation of the layered modulator with respect to 16QAM/QPSK hierarchical modulation. Referring to 16QAM/QPSK hierarchical modulation, which means 16QAM base layer and QPSK enhancement layer, each modulation symbol contains six 6 bits - $s_5$, $s_4$, $s_3$, $s_2$, $s_1$, so. The four (4) MSBs, $s_5$, $s_4$, $s_3$ and $s_2$, come from the base layer, and the two (2) LSBs, $s_1$ and $s_0$, come from the enhancement layer.

Given energy ratio *r* between the base layer and enhancement layer, $\alpha = \sqrt{\dfrac{r}{2(1+r)}}$ and $\beta = \sqrt{\dfrac{1}{2(1+r)}}$ can be defined such that $2(\alpha^2+\beta^2)=1$. Here, $\alpha$ denotes the amplitude of the base layer, and $\beta$ denotes the amplitude of enhancement layer. Moreover, $2(\alpha^2+\beta^2)=1$ is a constraint which is also referred to as power constraint and more accurately referred to as normalization.

Table 2 illustrates a layered modulation table with 16QAM base layer and QPSK enhancement layer.

[Table 2]

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 0 | 0 | 0 | 0 | 0 | 0 | $3\alpha + \sqrt{2}\cos(\theta+\pi/4)\beta$ | $3\alpha + \sqrt{2}\sin(\theta+\pi/4)\beta$ |
| 0 | 0 | 0 | 0 | 0 | 1 | $3\alpha + \sqrt{2}\cos(\theta+3\pi/4)\beta$ | $3\alpha + \sqrt{2}\sin(\theta+3\pi/4)\beta$ |
| 0 | 0 | 1 | 0 | 0 | 1 | $3\alpha + \sqrt{2}\cos(\theta+7\pi/4)\beta$ | $3\alpha + \sqrt{2}\sin(\theta+7\pi/4)\beta$ |
| 0 | 0 | 1 | 0 | 0 | 0 | $3\alpha + \sqrt{2}\cos(\theta+5\pi/4)\beta$ | $3\alpha + \sqrt{2}\sin(\theta+5\pi/4)\beta$ |
| 0 | 0 | 0 | 0 | 1 | 1 | $\alpha + \sqrt{2}\cos(\theta+\pi/4)\beta$ | $3\alpha + \sqrt{2}\sin(\theta+\pi/4)\beta$ |
| 0 | 0 | 0 | 0 | 1 | 0 | $\alpha + \sqrt{2}\cos(\theta+3\pi/4)\beta$ | $3\alpha + \sqrt{2}\sin(\theta+3\pi/4)\beta$ |
| 0 | 0 | 1 | 0 | 1 | 0 | $\alpha + \sqrt{2}\cos(\theta+7\pi/4)\beta$ | $3\alpha + \sqrt{2}\sin(\theta+7\pi/4)\beta$ |
| 0 | 0 | 1 | 0 | 1 | 1 | $\alpha + \sqrt{2}\cos(\theta+5\pi/4)\beta$ | $3\alpha + \sqrt{2}\sin(\theta+5\pi/4)\beta$ |
| 0 | 0 | 0 | 1 | 0 | 1 | $-3\alpha + \sqrt{2}\cos(\theta+\pi/4)\beta$ | $3\alpha + \sqrt{2}\sin(\theta+\pi/4)\beta$ |
| 0 | 0 | 0 | 1 | 0 | 0 | $-3\alpha + \sqrt{2}\cos(\theta+3\pi/4)\beta$ | $3\alpha + \sqrt{2}\sin(\theta+3\pi/4)\beta$ |
| 0 | 0 | 1 | 1 | 0 | 0 | $-3\alpha + \sqrt{2}\cos(\theta+7\pi/4)\beta$ | $3\alpha + \sqrt{2}\sin(\theta+7\pi/4)\beta$ |
| 0 | 0 | 1 | 1 | 0 | 1 | $-3\alpha + \sqrt{2}\cos(\theta+5\pi/4)\beta$ | $3\alpha + \sqrt{2}\sin(\theta+5\pi/4)\beta$ |
| 0 | 0 | 0 | 1 | 1 | 0 | $-\alpha + \sqrt{2}\cos(\theta+\pi/4)\beta$ | $3\alpha + \sqrt{2}\sin(\theta+\pi/4)\beta$ |
| 0 | 0 | 0 | 1 | 1 | 1 | $-\alpha + \sqrt{2}\cos(\theta+3\pi/4)\beta$ | $3\alpha + \sqrt{2}\sin(\theta+3\pi/4)\beta$ |
| 0 | 0 | 1 | 1 | 1 | 1 | $-\alpha + \sqrt{2}\cos(\theta+7\pi/4)\beta$ | $3\alpha + \sqrt{2}\sin(\theta+7\pi/4)\beta$ |
| 0 | 0 | 1 | 1 | 1 | 0 | $-\alpha + \sqrt{2}\cos(\theta+5\pi/4)\beta$ | $3\alpha + \sqrt{2}\sin(\theta+5\pi/4)\beta$ |
| 0 | 1 | 1 | 0 | 0 | 0 | $3\alpha + \sqrt{2}\cos(\theta+\pi/4)\beta$ | $\alpha + \sqrt{2}\sin(\theta+\pi/4)\beta$ |
| 0 | 1 | 1 | 0 | 0 | 1 | $3\alpha + \sqrt{2}\cos(\theta+3\pi/4)\beta$ | $\alpha + \sqrt{2}\sin(\theta+3\pi/4)\beta$ |
| 0 | 1 | 0 | 0 | 0 | 1 | $3\alpha + \sqrt{2}\cos(\theta+7\pi/4)\beta$ | $\alpha + \sqrt{2}\sin(\theta+7\pi/4)\beta$ |

(continued)

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 0 | 1 | 0 | 0 | 0 | 0 | $3\alpha + \sqrt{2}\cos(\theta + 5\pi/4)\beta$ | $\alpha + \sqrt{2}\sin(\theta + 5\pi/4)\beta$ |
| 0 | 1 | 1 | 0 | 1 | 1 | $\alpha + \sqrt{2}\cos(\theta + \pi/4)\beta$ | $\alpha + \sqrt{2}\sin(\theta + \pi/4)\beta$ |
| 0 | 1 | 1 | 0 | 1 | 0 | $\alpha + \sqrt{2}\cos(\theta + 3\pi/4)\beta$ | $\alpha + \sqrt{2}\sin(\theta + 3\pi/4)\beta$ |
| 0 | 1 | 0 | 0 | 1 | 0 | $\alpha + \sqrt{2}\cos(\theta + 7\pi/4)\beta$ | $\alpha + \sqrt{2}\sin(\theta + 7\pi/4)\beta$ |
| 0 | 1 | 0 | 0 | 1 | 1 | $\alpha + \sqrt{2}\cos(\theta + 5\pi/4)\beta$ | $\alpha + \sqrt{2}\sin(\theta + 5\pi/4)\beta$ |
| 0 | 1 | 1 | 1 | 0 | 1 | $-3\alpha + \sqrt{2}\cos(\theta + \pi/4)\beta$ | $\alpha + \sqrt{2}\sin(\theta + \pi/4)\beta$ |
| 0 | 1 | 1 | 1 | 0 | 0 | $-3\alpha + \sqrt{2}\cos(\theta + 3\pi/4)\beta$ | $\alpha + \sqrt{2}\sin(\theta + 3\pi/4)\beta$ |
| 0 | 1 | 1 | 1 | 0 | 1 | $-3\alpha + \sqrt{2}\cos(\theta + 7\pi/4)\beta$ | $\alpha + \sqrt{2}\sin(\theta + 7\pi/4)\beta$ |
| 0 | 1 | 0 | 1 | 0 | 1 | $-3\alpha + \sqrt{2}\cos(\theta + 5\pi/4)\beta$ | $\alpha + \sqrt{2}\sin(\theta + 5\pi/4)\beta$ |
| 0 | 1 | 1 | 1 | 1 | 0 | $-\alpha + \sqrt{2}\cos(\theta + \pi/4)\beta$ | $\alpha + \sqrt{2}\sin(\theta + \pi/4)\beta$ |
| 0 | 1 | 1 | 1 | 1 | 1 | $-\alpha + \sqrt{2}\cos(\theta + 3\pi/4)\beta$ | $\alpha + \sqrt{2}\sin(\theta + 3\pi/4)\beta$ |
| 0 | 1 | 0 | 1 | 1 | 1 | $-\alpha + \sqrt{2}\cos(\theta + 7\pi/4)\beta$ | $\alpha + \sqrt{2}\sin(\theta + 7\pi/4)\beta$ |
| 0 | 1 | 0 | 1 | 1 | 0 | $-\alpha + \sqrt{2}\cos(\theta + 5\pi/4)\beta$ | $\alpha + \sqrt{2}\sin(\theta + 5\pi/4)\beta$ |
| 1 | 0 | 1 | 0 | 0 | 0 | $3\alpha + \sqrt{2}\cos(\theta + \pi/4)\beta$ | $-3\alpha + \sqrt{2}\sin(\theta + \pi/4)\beta$ |
| 1 | 0 | 1 | 0 | 0 | 1 | $3\alpha + \sqrt{2}\cos(\theta + 3\pi/4)\beta$ | $-3\alpha + \sqrt{2}\sin(\theta + 3\pi/4)\beta$ |
| 1 | 0 | 0 | 0 | 0 | 1 | $3\alpha + \sqrt{2}\cos(\theta + 7\pi/4)\beta$ | $-3\alpha + \sqrt{2}\sin(\theta + 7\pi/4)\beta$ |
| 1 | 0 | 0 | 0 | 0 | 0 | $3\alpha + \sqrt{2}\cos(\theta + 5\pi/4)\beta$ | $-3\alpha + \sqrt{2}\sin(\theta + 5\pi/4)\beta$ |
| 1 | 0 | 1 | 0 | 1 | 1 | $\alpha + \sqrt{2}\cos(\theta + \pi/4)\beta$ | $-3\alpha + \sqrt{2}\sin(\theta + \pi/4)\beta$ |
| 1 | 0 | 1 | 0 | 1 | 0 | $\alpha + \sqrt{2}\cos(\theta + 3\pi/4)\beta$ | $-3\alpha + \sqrt{2}\sin(\theta + 3\pi/4)\beta$ |
| 1 | 0 | 0 | 0 | 1 | 0 | $\alpha + \sqrt{2}\cos(\theta + 7\pi/4)\beta$ | $-3\alpha + \sqrt{2}\sin(\theta + 7\pi/4)\beta$ |
| 1 | 0 | 0 | 0 | 1 | 1 | $\alpha + \sqrt{2}\cos(\theta + 5\pi/4)\beta$ | $-3\alpha + \sqrt{2}\sin(\theta + 5\pi/4)\beta$ |
| 1 | 0 | 1 | 1 | 0 | 1 | $-3\alpha + \sqrt{2}\cos(\theta + \pi/4)\beta$ | $-3\alpha + \sqrt{2}\sin(\theta + \pi/4)\beta$ |

(continued)

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 1 | 0 | 1 | 1 | 0 | 0 | $-3\alpha + \sqrt{2}\cos(\theta + 3\pi/4)\beta$ | $-3\alpha + \sqrt{2}\sin(\theta + 3\pi/4)\beta$ |
| 1 | 0 | 0 | 1 | 0 | 0 | $-3\alpha + \sqrt{2}\cos(\theta + 7\pi/4)\beta$ | $-3\alpha + \sqrt{2}\sin(\theta + 7\pi/4)\beta$ |
| 1 | 0 | 0 | 1 | 0 | 1 | $-3\alpha + \sqrt{2}\cos(\theta + 5\pi/4)\beta$ | $-3\alpha + \sqrt{2}\sin(\theta + 5\pi/4)\beta$ |
| 1 | 0 | 1 | 1 | 1 | 0 | $-\alpha + \sqrt{2}\cos(\theta + \pi/4)\beta$ | $-3\alpha + \sqrt{2}\sin(\theta + \pi/4)\beta$ |
| 1 | 0 | 1 | 1 | 1 | 1 | $-\alpha + \sqrt{2}\cos(\theta + 3\pi/4)\beta$ | $-3\alpha + \sqrt{2}\sin(\theta + 3\pi/4)\beta$ |
| 1 | 0 | 0 | 1 | 1 | 1 | $-\alpha + \sqrt{2}\cos(\theta + 7\pi/4)\beta$ | $-3\alpha + \sqrt{2}\sin(\theta + 7\pi/4)\beta$ |
| 1 | 0 | 0 | 1 | 1 | 0 | $-\alpha + \sqrt{2}\cos(\theta + 5\pi/4)\beta$ | $-3\alpha + \sqrt{2}\sin(\theta + 5\pi/4)\beta$ |
| 1 | 1 | 0 | 1 | 0 | 1 | $3\alpha + \sqrt{2}\cos(\theta + \pi/4)\beta$ | $-\alpha + \sqrt{2}\sin(\theta + \pi/4)\beta$ |
| 1 | 1 | 0 | 1 | 0 | 0 | $3\alpha + \sqrt{2}\cos(\theta + 3\pi/4)\beta$ | $-\alpha + \sqrt{2}\sin(\theta + 3\pi/4)\beta$ |
| 1 | 1 | 1 | 1 | 0 | 0 | $3\alpha + \sqrt{2}\cos(\theta + 7\pi/4)\beta$ | $-\alpha + \sqrt{2}\sin(\theta + 7\pi/4)\beta$ |
| 1 | 1 | 1 | 1 | 0 | 1 | $3\alpha + \sqrt{2}\cos(\theta + 5\pi/4)\beta$ | $-\alpha + \sqrt{2}\sin(\theta + 5\pi/4)\beta$ |
| 1 | 1 | 0 | 1 | 1 | 0 | $\alpha + \sqrt{2}\cos(\theta + \pi/4)\beta$ | $-\alpha + \sqrt{2}\sin(\theta + \pi/4)\beta$ |
| 1 | 1 | 0 | 1 | 1 | 1 | $\alpha + \sqrt{2}\cos(\theta + 3\pi/4)\beta$ | $-\alpha + \sqrt{2}\sin(\theta + 3\pi/4)\beta$ |
| 1 | 1 | 1 | 1 | 1 | 1 | $\alpha + \sqrt{2}\cos(\theta + 7\pi/4)\beta$ | $-\alpha + \sqrt{2}\sin(\theta + 7\pi/4)\beta$ |
| 1 | 1 | 1 | 1 | 1 | 0 | $\alpha + \sqrt{2}\cos(\theta + 5\pi/4)\beta$ | $-\alpha + \sqrt{2}\sin(\theta + 5\pi/4)\beta$ |
| 1 | 1 | 0 | 1 | 0 | 1 | $-3\alpha + \sqrt{2}\cos(\theta + \pi/4)\beta$ | $-\alpha + \sqrt{2}\sin(\theta + \pi/4)\beta$ |
| 1 | 1 | 0 | 1 | 0 | 0 | $-3\alpha + \sqrt{2}\cos(\theta + 3\pi/4)\beta$ | $-\alpha + \sqrt{2}\sin(\theta + 3\pi/4)\beta$ |
| 1 | 1 | 1 | 1 | 0 | 0 | $-3\alpha + \sqrt{2}\cos(\theta + 7\pi/4)\beta$ | $-\alpha + \sqrt{2}\sin(\theta + 7\pi/4)\beta$ |
| 1 | 1 | 1 | 1 | 0 | 1 | $-3\alpha + \sqrt{2}\cos(\theta + 5\pi/4)\beta$ | $-\alpha + \sqrt{2}\sin(\theta + 5\pi/4)\beta$ |
| 1 | 1 | 0 | 1 | 1 | 0 | $-\alpha + \sqrt{2}\cos(\theta + \pi/4)\beta$ | $-\alpha + \sqrt{2}\sin(\theta + \pi/4)\beta$ |
| 1 | 1 | 0 | 1 | 1 | 1 | $-\alpha + \sqrt{2}\cos(\theta + 3\pi/4)\beta$ | $-\alpha + \sqrt{2}\sin(\theta + 3\pi/4)\beta$ |
| 1 | 1 | 1 | 1 | 1 | 1 | $-\alpha + \sqrt{2}\cos(\theta + 7\pi/4)\beta$ | $-\alpha + \sqrt{2}\sin(\theta + 7\pi/4)\beta$ |

(continued)

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 1 | 1 | 1 | 1 | 1 | 0 | $-\alpha + \sqrt{2}\cos(\theta + 5\pi/4)\beta$ | $-\alpha + \sqrt{2}\sin(\theta + 5\pi/4)\beta$ |

Referring to Table 2, each column defines the symbol position for each six (6) bits, $s_5$, $s_4$, $s_3$, $s_2$, $s_1$, $s_0$. Here, the position of each symbol is given in a two-dimensional signal space ($m_I$, $m_Q$). This means that each symbol can be represented by $S(t) = \llcorner M_I \cos(2\pi f_0 t + \phi_0) + M_Q * \sin(2\pi f_0 t + \phi_0) \lrcorner \phi(t)$. Simply put, the complex modulation symbol S = ($m_I$, $m_Q$) for each [$s_5$, $s_4$, $s_3$, $s_2$, $s_1$, $s_0$] is specified in $S(t) = \llcorner M_I \cos(2\pi f_0 t + \phi_0) + M_Q * \sin(2\pi f_0 t + \phi_0) \lrcorner \phi(t)$.

Here, $w_0$ denotes carrier frequency, $\pi_0$ denotes an initial phase of the carrier, and $\phi(t)$ denotes the symbol shaping or pulse shaping wave. Here, $\cos(2\pi f_0 t + \phi_0)$ and $\sin(2\pi f_0 t + \phi_0)$ denote the carrier signal with initial phase $\phi_0$ and carrier frequency $f_0$. Moreover, $\varphi(t)$ denotes the pulse-shaping, the shape of a transmit symbol.

In the above definition of $S(t)$, except the $m_I$ and $m_Q$ value, other parameters can usually either be shared between the transmitter and the receiver or be detected by the receiver itself. For correctly demodulating $S(t)$, it is necessary to define and share the possible value information of $m_I$ and $m_Q$.

The possible value of $m_I(k)$ and $m_Q(k)$, which denote the $m_I$ and $m_Q$ value for the k$^{th}$ symbol, are given in Table 1. It shows for representing each group inputs bits $s_5$, $s_4$, $s_3$, $s_2$, $s_1$, $s_0$ the symbol shall be modulated by corresponding parameters shown in the table.

Further, another application example for BCMCS for hierarchical modulation is discussed below. In general, layered modulation can be a superposition of any two modulation schemes. In BCMCS, a QPSK enhancement layer is superposed on a base QPSK or 16-QAM layer to obtain the resultant signal constellation. The energy ratio $r$ is the power ratio between the base layer and the enhancement. Furthermore, the enhancement layer is rotated by the angle $\theta$ in counter-clockwise direction.

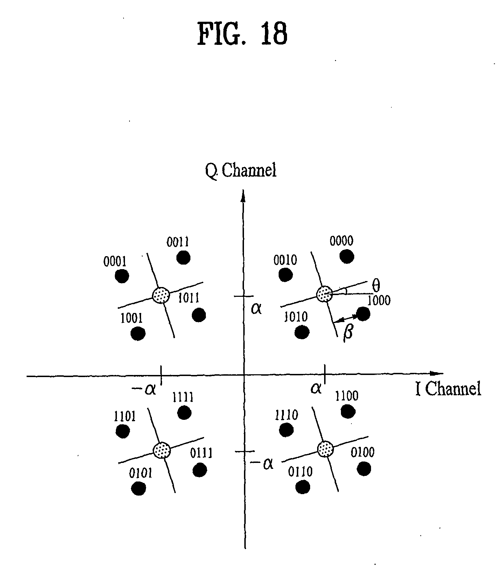

Figure 18 is an exemplary diagram showing the signal constellation for the layered modulator with QPSK/QPSK hierarchical modulation. Referring to QPSK/QPSK hierarchical modulation, which means QPSK base layer and QPSK enhancement layer, each modulation symbol contains four (4) bits, namely, $s_3$, $s_2$, $s_1$, $s_0$. Here, there are two (2) MSBs which are $s_3$ and $s_2$, and two (2) LSBs which are $s_1$ and so. The two (2) MSBs are from the base layer and the two LSBs come from the enhancement layer.

Given energy ratio $r$ between the base layer and enhancement layer, $\alpha = \sqrt{\dfrac{r}{2(1+r)}}$ and

$\beta = \sqrt{\dfrac{1}{2(1+r)}}$ can be defined such that $2(\alpha^2 + \beta^2) = 1$. Here, $\alpha$ denotes the amplitude of the base layer, and $\beta$ denotes the amplitude of enhancement layer. Moreover, $2(\alpha^2 + \beta^2) = 1$ is a constraint which is also referred to as power constraint and more accurately referred to as normalization.

Table 3 illustrates a layered modulation table with QPSK base layer and QPSK enhancement layer.

**[Table 3]**

| Modulator Input Bits | | | | Modulation Symbols | |
|---|---|---|---|---|---|
| $s_3$ | $s_2$ | $s_1$ | $s_0$ | $m_I(k)$ | $m_Q(k)$ |
| 0 | 0 | 0 | 0 | $\alpha + \sqrt{2}\cos(\theta + \pi/4)\beta$ | $\alpha + \sqrt{2}\sin(\theta + \pi/4)\beta$ |
| 0 | 0 | 1 | 0 | $\alpha + \sqrt{2}\cos(\theta + 3\pi/4)\beta$ | $\alpha + \sqrt{2}\sin(\theta + 3\pi/4)\beta$ |
| 1 | 0 | 0 | 0 | $\alpha + \sqrt{2}\cos(\theta + 7\pi/4)\beta$ | $\alpha + \sqrt{2}\sin(\theta + 7\pi/4)\beta$ |
| 1 | 0 | 1 | 0 | $\alpha + \sqrt{2}\cos(\theta + 5\pi/4)\beta$ | $\alpha + \sqrt{2}\sin(\theta + 5\pi/4)\beta$ |

(continued)

| Modulator Input Bits | | | | Modulation Symbols | |
|---|---|---|---|---|---|
| 0 | 0 | 1 | 1 | $-\alpha + \sqrt{2}\cos(\theta + \pi/4)\beta$ | $\alpha + \sqrt{2}\sin(\theta + \pi/4)\beta$ |
| 0 | 0 | 0 | 1 | $-\alpha + \sqrt{2}\cos(\theta + 3\pi/4)\beta$ | $\alpha + \sqrt{2}\sin(\theta + 3\pi/4)\beta$ |
| 1 | 0 | 1 | 1 | $-\alpha + \sqrt{2}\cos(\theta + 7\pi/4)\beta$ | $\alpha + \sqrt{2}\sin(\theta + 7\pi/4)\beta$ |
| 1 | 0 | 0 | 1 | $-\alpha + \sqrt{2}\cos(\theta + 5\pi/4)\beta$ | $\alpha + \sqrt{2}\sin(\theta + 5\pi/4)\beta$ |
| 1 | 1 | 0 | 0 | $\alpha + \sqrt{2}\cos(\theta + \pi/4)\beta$ | $-\alpha + \sqrt{2}\sin(\theta + \pi/4)\beta$ |
| 1 | 1 | 1 | 0 | $\alpha + \sqrt{2}\cos(\theta + 3\pi/4)\beta$ | $-\alpha + \sqrt{2}\sin(\theta + 3\pi/4)\beta$ |
| 0 | 1 | 0 | 0 | $\alpha + \sqrt{2}\cos(\theta + 7\pi/4)\beta$ | $-\alpha + \sqrt{2}\sin(\theta + 7\pi/4)\beta$ |
| 0 | 1 | 1 | 0 | $\alpha + \sqrt{2}\cos(\theta + 5\pi/4)\beta$ | $-\alpha + \sqrt{2}\sin(\theta + 5\pi/4)\beta$ |
| 1 | 1 | 1 | 1 | $-\alpha + \sqrt{2}\cos(\theta + \pi/4)\beta$ | $-\alpha + \sqrt{2}\sin(\theta + \pi/4)\beta$ |
| 1 | 1 | 0 | 1 | $-\alpha + \sqrt{2}\cos(\theta + 3\pi/4)\beta$ | $-\alpha + \sqrt{2}\sin(\theta + 3\pi/4)\beta$ |
| 0 | 1 | 1 | 1 | $-\alpha + \sqrt{2}\cos(\theta + 7\pi/4)\beta$ | $-\alpha + \sqrt{2}\sin(\theta + 7\pi/4)\beta$ |
| 0 | 1 | 0 | 1 | $-\alpha + \sqrt{2}\cos(\theta + 5\pi/4)\beta$ | $-\alpha + \sqrt{2}\sin(\theta + 5\pi/4)\beta$ |

Referring to Table 3, each column defines the symbol position for each four (4) bits, $s_3$, $s_2$, $s_1$, so. Here, the position of each symbol is given in a two-dimensional signal space ($m_I$, $m_Q$). This means that each symbol can be represented by $S(t) = \llcorner M_I \cos(2\pi f_0 t + \phi_0) + M_Q^* \sin(2\pi f0t + \phi_0) \lrcorner \phi(t)$. Simply put, the complex modulation symbol S = ($m_I$, $m_Q$) for each [$s_3$, $s_2$, $s_1$, $s_0$] is specified in $S(t) = \llcorner M_I \cos(2\pi f_0 t + \phi_0) + M_o^* \sin(2\pi f_0 t + \phi_0) \lrcorner \phi(t)$.

Here, $\cos(2\pi f_0 t + \phi_0)$ and $\sin(2\pi f_0 t + \phi_0)$ denote the carrier signal with initial phase $\phi_0$ and carrier frequency $f_0$. Moreover, $\varphi(t)$ denotes the pulse-shaping, the shape of a transmit symbol.

In the above definition of $S(t)$, except the $m_I$ and $m_Q$ value, other parameters can usually either be shared between the transmitter and the receiver or be detected by the receiver itself. For correctly demodulating $S(t)$, it is necessary to define and share the possible value information of $m_I$ and $m_Q$.

The possible value of $m_I$ (k) and $m_Q$ (k), which denote the $m_I$ and $m_Q$ value for the kth symbol, are given in Table 1. It shows for representing each group inputs bits $s_3$, $s_2$, $s_1$, $s_0$ the symbol shall be modulated by corresponding parameters shown in the table..

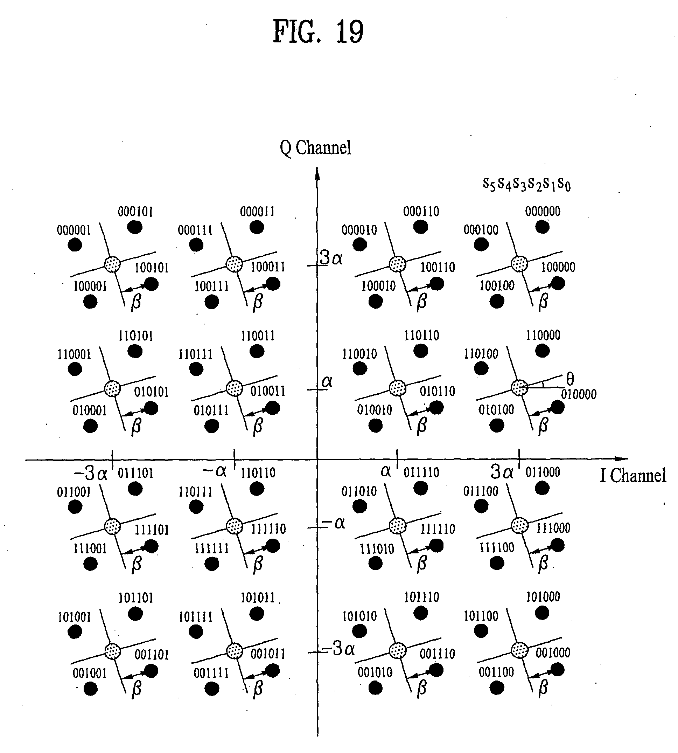

Figure 19 is an exemplary diagram illustrating the signal constellation of the layered modulator with respect to 16QAM/QPSK hierarchical modulation. Referring to another 16QAM/QPSK hierarchical modulation, which means 16QAM base layer and QPSK enhancement layer, each modulation symbol contains six (6) bits - $s_5$, $s_4$, $s_3$, $s_2$, $s_1$, $s_0$. The four (4) MSBs, $s_5$, $s_4$, $s_3$ and $s_2$, come from the base layer, and the two (2) LSBs, $s_1$ and $s_0$, come from the enhancement layer.

Given energy ratio r between the base layer and enhancement layer, $\alpha = \sqrt{\dfrac{r}{2(1+r)}}$ and $\beta = \sqrt{\dfrac{1}{2(1+r)}}$

can be defined such that $2(\alpha^2 + \beta^2) = 1$. Here, $\alpha$ denotes the amplitude of the base layer, and $\beta$ denotes the amplitude of enhancement layer. Moreover, $2(\alpha^2+\beta^2)=1$ is a constraint which is also referred to as power constraint and more accurately referred to as normalization.

Table 4 illustrates a layered modulation table with 16QAM base layer and QPSK enhancement layer.

[Table 4]

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 0 | 0 | 0 | 0 | 0 | 0 | $3\alpha + \sqrt{2}\cos(\theta + \pi/4)\beta$ | $3\alpha + \sqrt{2}\sin(\theta + \pi/4)\beta$ |
| 0 | 0 | 0 | 1 | 0 | 0 | $3\alpha + \sqrt{2}\cos(\theta + 3\pi/4)\beta$ | $3\alpha + \sqrt{2}\sin(\theta + 3\pi/4)\beta$ |
| 1 | 0 | 0 | 0 | 0 | 0 | $3\alpha + \sqrt{2}\cos(\theta + 7\pi/4)\beta$ | $3\alpha + \sqrt{2}\sin(\theta + 7\pi/4)\beta$ |
| 1 | 0 | 0 | 1 | 0 | 0 | $3\alpha + \sqrt{2}\cos(\theta + 5\pi/4)\beta$ | $3\alpha + \sqrt{2}\sin(\theta + 5\pi/4)\beta$ |
| 0 | 0 | 0 | 1 | 1 | 0 | $\alpha + \sqrt{2}\cos(\theta + \pi/4)\beta$ | $3\alpha + \sqrt{2}\sin(\theta + \pi/4)\beta$ |
| 0 | 0 | 0 | 0 | 1 | 0 | $\alpha + \sqrt{2}\cos(\theta + 3\pi/4)\beta$ | $3\alpha + \sqrt{2}\sin(\theta + 3\pi/4)\beta$ |
| 1 | 0 | 0 | 1 | 1 | 0 | $\alpha + \sqrt{2}\cos(\theta + 7\pi/4)\beta$ | $3\alpha + \sqrt{2}\sin(\theta + 7\pi/4)\beta$ |
| 1 | 0 | 0 | 0 | 1 | 0 | $\alpha + \sqrt{2}\cos(\theta + 5\pi/4)\beta$ | $3\alpha + \sqrt{2}\sin(\theta + 5\pi/4)\beta$ |
| 0 | 0 | 0 | 1 | 0 | 1 | $-3\alpha + \sqrt{2}\cos(\theta + \pi/4)\beta$ | $3\alpha + \sqrt{2}\sin(\theta + \pi/4)\beta$ |
| 0 | 0 | 0 | 0 | 0 | 1 | $-3\alpha + \sqrt{2}\cos(\theta + 3\pi/4)\beta$ | $3\alpha + \sqrt{2}\sin(\theta + 3\pi/4)\beta$ |
| 1 | 0 | 0 | 1 | 0 | 1 | $-3\alpha + \sqrt{2}\cos(\theta + 7\pi/4)\beta$ | $3\alpha + \sqrt{2}\sin(\theta + 7\pi/4)\beta$ |
| 1 | 0 | 0 | 0 | 0 | 1 | $-3\alpha + \sqrt{2}\cos(\theta + 5\pi/4)\beta$ | $3\alpha + \sqrt{2}\sin(\theta + 5\pi/4)\beta$ |
| 0 | 0 | 0 | 0 | 1 | 1 | $-\alpha + \sqrt{2}\cos(\theta + \pi/4)\beta$ | $3\alpha + \sqrt{2}\sin(\theta + \pi/4)\beta$ |
| 0 | 0 | 0 | 1 | 1 | 1 | $-\alpha + \sqrt{2}\cos(\theta + 3\pi/4)\beta$ | $3\alpha + \sqrt{2}\sin(\theta + 3\pi/4)\beta$ |
| 1 | 0 | 0 | 0 | 1 | 1 | $-\alpha + \sqrt{2}\cos(\theta + 7\pi/4)\beta$ | $3\alpha + \sqrt{2}\sin(\theta + 7\pi/4)\beta$ |
| 1 | 0 | 0 | 1 | 1 | 1 | $-\alpha + \sqrt{2}\cos(\theta + 5\pi/4)\beta$ | $3\alpha + \sqrt{2}\sin(\theta + 5\pi/4)\beta$ |
| 1 | 1 | 0 | 0 | 0 | 0 | $3\alpha + \sqrt{2}\cos(\theta + \pi/4)\beta$ | $\alpha + \sqrt{2}\sin(\theta + \pi/4)\beta$ |
| 1 | 1 | 0 | 1 | 0 | 0 | $3\alpha + \sqrt{2}\cos(\theta + 3\pi/4)\beta$ | $\alpha + \sqrt{2}\sin(\theta + 3\pi/4)\beta$ |

(continued)

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 0 | 1 | 0 | 0 | 0 | 0 | $3\alpha + \sqrt{2}\cos(\theta + 7\pi/4)\beta$ | $\alpha + \sqrt{2}\sin(\theta + 7\pi/4)\beta$ |
| 0 | 1 | 0 | 1 | 0 | 0 | $3\alpha + \sqrt{2}\cos(\theta + 5\pi/4)\beta$ | $\alpha + \sqrt{2}\sin(\theta + 5\pi/4)\beta$ |
| 1 | 1 | 0 | 1 | 1 | 0 | $\alpha + \sqrt{2}\cos(\theta + \pi/4)\beta$ | $\alpha + \sqrt{2}\sin(\theta + \pi/4)\beta$ |
| 1 | 1 | 0 | 0 | 1 | 0 | $\alpha + \sqrt{2}\cos(\theta + 3\pi/4)\beta$ | $\alpha + \sqrt{2}\sin(\theta + 3\pi/4)\beta$ |
| 0 | 1 | 0 | 1 | 1 | 0 | $\alpha + \sqrt{2}\cos(\theta + 7\pi/4)\beta$ | $\alpha + \sqrt{2}\sin(\theta + 7\pi/4)\beta$ |
| 0 | 1 | 0 | 0 | 1 | 0 | $\alpha + \sqrt{2}\cos(\theta + 5\pi/4)\beta$ | $\alpha + \sqrt{2}\sin(\theta + 5\pi/4)\beta$ |
| 1 | 1 | 0 | 1 | 0 | 1 | $-3\alpha + \sqrt{2}\cos(\theta + \pi/4)\beta$ | $\alpha + \sqrt{2}\sin(\theta + \pi/4)\beta$ |
| 1 | 1 | 0 | 0 | 0 | 1 | $-3\alpha + \sqrt{2}\cos(\theta + 3\pi/4)\beta$ | $\alpha + \sqrt{2}\sin(\theta + 3\pi/4)\beta$ |
| 0 | 1 | 0 | 1 | 0 | 1 | $-3\alpha + \sqrt{2}\cos(\theta + 7\pi/4)\beta$ | $\alpha + \sqrt{2}\sin(\theta + 7\pi/4)\beta$ |
| 0 | 1 | 0 | 0 | 0 | 1 | $-3\alpha + \sqrt{2}\cos(\theta + 5\pi/4)\beta$ | $\alpha + \sqrt{2}\sin(\theta + 5\pi/4)\beta$ |
| 1 | 1 | 0 | 0 | 1 | 1 | $-\alpha + \sqrt{2}\cos(\theta + \pi/4)\beta$ | $\alpha + \sqrt{2}\sin(\theta + \pi/4)\beta$ |
| 1 | 1 | 0 | 1 | 1 | 1 | $-\alpha + \sqrt{2}\cos(\theta + 3\pi/4)\beta$ | $\alpha + \sqrt{2}\sin(\theta + 3\pi/4)\beta$ |
| 0 | 1 | 0 | 0 | 1 | 1 | $-\alpha + \sqrt{2}\cos(\theta + 7\pi/4)\beta$ | $\alpha + \sqrt{2}\sin(\theta + 7\pi/4)\beta$ |
| 0 | 1 | 0 | 1 | 1 | 1 | $-\alpha + \sqrt{2}\cos(\theta + 5\pi/4)\beta$ | $\alpha + \sqrt{2}\sin(\theta + 5\pi/4)\beta$ |
| 1 | 0 | 1 | 0 | 0 | 0 | $3\alpha + \sqrt{2}\cos(\theta + \pi/4)\beta$ | $-3\alpha + \sqrt{2}\sin(\theta + \pi/4)\beta$ |
| 1 | 0 | 1 | 1 | 0 | 0 | $3\alpha + \sqrt{2}\cos(\theta + 3\pi/4)\beta$ | $-3\alpha + \sqrt{2}\sin(\theta + 3\pi/4)\beta$ |
| 0 | 0 | 1 | 0 | 0 | 0 | $3\alpha + \sqrt{2}\cos(\theta + 7\pi/4)\beta$ | $-3\alpha + \sqrt{2}\sin(\theta + 7\pi/4)\beta$ |
| 0 | 0 | 1 | 1 | 0 | 0 | $3\alpha + \sqrt{2}\cos(\theta + 5\pi/4)\beta$ | $-3\alpha + \sqrt{2}\sin(\theta + 5\pi/4)\beta$ |
| 1 | 0 | 1 | 1 | 1 | 0 | $\alpha + \sqrt{2}\cos(\theta + \pi/4)\beta$ | $-3\alpha + \sqrt{2}\sin(\theta + \pi/4)\beta$ |
| 1 | 0 | 1 | 0 | 1 | 0 | $\alpha + \sqrt{2}\cos(\theta + 3\pi/4)\beta$ | $-3\alpha + \sqrt{2}\sin(\theta + 3\pi/4)\beta$ |

(continued)

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 0 | 0 | 1 | 1 | 1 | 0 | $\alpha + \sqrt{2}\cos(\theta + 7\pi/4)\beta$ | $-3\alpha + \sqrt{2}\sin(\theta + 7\pi/4)\beta$ |
| 0 | 0 | 1 | 0 | 1 | 0 | $\alpha + \sqrt{2}\cos(\theta + 5\pi/4)\beta$ | $-3\alpha + \sqrt{2}\sin(\theta + 5\pi/4)\beta$ |
| 1 | 0 | 1 | 1 | 0 | 1 | $-3\alpha + \sqrt{2}\cos(\theta + \pi/4)\beta$ | $-3\alpha + \sqrt{2}\sin(\theta + \pi/4)\beta$ |
| 1 | 0 | 1 | 0 | 0 | 1 | $-3\alpha + \sqrt{2}\cos(\theta + 3\pi/4)\beta$ | $-3\alpha + \sqrt{2}\sin(\theta + 3\pi/4)\beta$ |
| 0 | 0 | 1 | 1 | 0 | 1 | $-3\alpha + \sqrt{2}\cos(\theta + 7\pi/4)\beta$ | $-3\alpha + \sqrt{2}\sin(\theta + 7\pi/4)\beta$ |
| 0 | 0 | 1 | 0 | 0 | 1 | $-3\alpha + \sqrt{2}\cos(\theta + 5\pi/4)\beta$ | $-3\alpha + \sqrt{2}\sin(\theta + 5\pi/4)\beta$ |
| 1 | 0 | 1 | 0 | 1 | 1 | $-\alpha + \sqrt{2}\cos(\theta + \pi/4)\beta$ | $-3\alpha + \sqrt{2}\sin(\theta + \pi/4)\beta$ |
| 1 | 0 | 1 | 1 | 1 | 1 | $-\alpha + \sqrt{2}\cos(\theta + 3\pi/4)\beta$ | $-3\alpha + \sqrt{2}\sin(\theta + 3\pi/4)\beta$ |
| 0 | 0 | 1 | 0 | 1 | 1 | $-\alpha + \sqrt{2}\cos(\theta + 7\pi/4)\beta$ | $-3\alpha + \sqrt{2}\sin(\theta + 7\pi/4)\beta$ |
| 0 | 0 | 1 | 1 | 1 | 1 | $-\alpha + \sqrt{2}\cos(\theta + 5\pi/4)\beta$ | $-3\alpha + \sqrt{2}\sin(\theta + 5\pi/4)\beta$ |
| 0 | 1 | 1 | 0 | 0 | 0 | $3\alpha + \sqrt{2}\cos(\theta + \pi/4)\beta$ | $-\alpha + \sqrt{2}\sin(\theta + \pi/4)\beta$ |
| 0 | 1 | 1 | 1 | 0 | 0 | $3\alpha + \sqrt{2}\cos(\theta + 3\pi/4)\beta$ | $-\alpha + \sqrt{2}\sin(\theta + 3\pi/4)\beta$ |
| 1 | 1 | 1 | 0 | 0 | 0 | $3\alpha + \sqrt{2}\cos(\theta + 7\pi/4)\beta$ | $-\alpha + \sqrt{2}\sin(\theta + 7\pi/4)\beta$ |
| 1 | 1 | 1 | 1 | 0 | 0 | $3\alpha + \sqrt{2}\cos(\theta + 5\pi/4)\beta$ | $-\alpha + \sqrt{2}\sin(\theta + 5\pi/4)\beta$ |
| 0 | 1 | 1 | 1 | 1 | 0 | $\alpha + \sqrt{2}\cos(\theta + \pi/4)\beta$ | $-\alpha + \sqrt{2}\sin(\theta + \pi/4)\beta$ |
| 0 | 1 | 1 | 0 | 1 | 0 | $\alpha + \sqrt{2}\cos(\theta + 3\pi/4)\beta$ | $-\alpha + \sqrt{2}\sin(\theta + 3\pi/4)\beta$ |
| 1 | 1 | 1 | 1 | 1 | 0 | $\alpha + \sqrt{2}\cos(\theta + 7\pi/4)\beta$ | $-\alpha + \sqrt{2}\sin(\theta + 7\pi/4)\beta$ |
| 1 | 1 | 1 | 0 | 1 | 0 | $\alpha + \sqrt{2}\cos(\theta + 5\pi/4)\beta$ | $-\alpha + \sqrt{2}\sin(\theta + 5\pi/4)\beta$ |
| 0 | 1 | 1 | 1 | 0 | 1 | $-3\alpha + \sqrt{2}\cos(\theta + \pi/4)\beta$ | $-\alpha + \sqrt{2}\sin(\theta + \pi/4)\beta$ |
| 0 | 1 | 1 | 0 | 0 | 1 | $-3\alpha + \sqrt{2}\cos(\theta + 3\pi/4)\beta$ | $-\alpha + \sqrt{2}\sin(\theta + 3\pi/4)\beta$ |
| 1 | 1 | 1 | 1 | 0 | 1 | $-3\alpha + \sqrt{2}\cos(\theta + 7\pi/4)\beta$ | $-\alpha + \sqrt{2}\sin(\theta + 7\pi/4)\beta$ |

(continued)

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 1 | 1 | 1 | 0 | 0 | 1 | $-3\alpha+\sqrt{2}\cos(\theta+5\pi/4)\beta$ | $-\alpha+\sqrt{2}\sin(\theta+5\pi/4)\beta$ |
| 0 | 1 | 1 | 0 | 1 | 1 | $-\alpha+\sqrt{2}\cos(\theta+\pi/4)\beta$ | $-\alpha+\sqrt{2}\sin(\theta+\pi/4)\beta$ |
| 0 | 1 | 1 | 1 | 1 | 1 | $-\alpha+\sqrt{2}\cos(\theta+3\pi/4)\beta$ | $-\alpha+\sqrt{2}\sin(\theta+3\pi/4)\beta$ |
| 1 | 1 | 1 | 0 | 1 | 1 | $-\alpha+\sqrt{2}\cos(\theta+7\pi/4)\beta$ | $-\alpha+\sqrt{2}\sin(\theta+7\pi/4)\beta$ |
| 1 | 1 | 1 | 1 | 1 | 1 | $-\alpha+\sqrt{2}\cos(\theta+5\pi/4)\beta$ | $-\alpha+\sqrt{2}\sin(\theta+5\pi/4)\beta$ |

Referring to Table 4, each column defines the symbol position for each six (6) bits, $s_5$, $s_4$, $s_3$, $s_2$, $s_1$, $s_0$. Here, the position of each symbol is given in a two-dimensional signal space ($m_I$, $m_Q$).This means that each symbol can be represented by $S(t) = \lfloor M_I\cos(2\pi f_0 t + \phi_0) + M_Q*\sin(2\pi f_0 t + \phi_0)\rfloor\phi(t)$. Simply put, the complex modulation symbol S = ($m_I$, $m_Q$) for each [$s_5$, $s_4$, $s_3$, $s_2$, $s_1$, $s_0$] is specified in $S(t) = \lfloor M_I\cos(2\pi f_0 t + \phi 0) + M_Q*\sin(2\pi f_0 t + \phi_0)\phi(t)$.

Here, $w_0$ denotes carrier frequency, $\pi_0$ denotes an initial phase of the carrier, and $\phi(t)$ denotes the symbol shaping or pulse shaping wave. Here, $\cos(2\pi f_0 t + \phi_0)$ and $\sin(2\pi f_0 t + \phi_0)$ denote the carrier signal with initial phase $\phi_0$ and carrier frequency $f_0$. Moreover, $\phi(t)$ denotes the pulse-shaping, the shape of a transmit symbol.

In the above definition of $S(t)$, except the $m_I$ and $m_Q$ value, other parameters can usually either be shared between the transmitter and the receiver or be detected by the receiver itself. For correctly demodulating $S(t)$, it is necessary to define and share the possible value information of $m_I$ and $m_Q$.

The possible value of $m_I(k)$ and $m_Q(k)$, which denote the $m_I$ and $m_Q$ value for the $k^{th}$ symbol, are given in Table 1. It shows for representing each group inputs bits $s_5$, $s_4$, $s_3$, $s_2$, $s_1$, $s_0$ the symbol shall be modulated by corresponding parameters shown in the table.

With respect to the definitions of $m_I$ and $m_Q$ in Table 1-4, in addition to the contents, the show that the rotation angle $\theta$ also needs to be shared along with those tables between transmitter and receiver. Table 5 can be used to address this problem regarding how the receiver and transmitter share the rotation angle information.

To this end, Table 5 can be used which defines and/or maps four (4) bits to a rotation angle. If this table is known by the receiver beforehand, then the transmitter only needs to sent four (4) bits to receiver to indicate to the receiver the initial rotation angle for demodulating next rotated layered modulated symbols. This table is an example of quantizing the rotation angle $\theta$ with four (4) bits and uniform quantization. It is possible to quantize the rotation angle $\theta$ with other number of bits and different quantization rule for different accuracy.

More specifically, this table is either shared beforehand by the transmitter and receiver (e.g., access network and access terminal), downloaded to the receiver (e.g., access terminal) over the air, or only used by the transmitter (e.g., access network) when the hierarchical modulation is enabled. The default rotation word for hierarchical modulation is 0000, which corresponds to 0.0.

Further, this table can be used by the receiver for demodulating the rotated layered modulation. Compared with the regular or un-rotated layered modulation, the initial rotation angle is essentially zero (0). This information of initial rotation angle of zero (0) indicates an implicit consensus between the transmitter and the receiver. However, for rotated layered modulation, this information may not be implicitly shared between the transmitter and/or the receiver. In other words, a mechanism to send or indicate this initial rotation angle to the receiver is necessary.

**[Table 5]**

| Index | Bits for Angle Rotating | Mapped Rotation Angle (degree) | |
|---|---|---|---|
| | | Unit: degree | Unit: radian |
| 0 | 0000 | 0.0 | 0.0 |
| 1 | 0001 | 2.81 | 0.04909 |
| 2 | 0011 | 5.63 | 0.09817 |

(continued)

| Index | Bits for Angle Rotating | Mapped Rotation Angle (degree) | |
|---|---|---|---|
| | | Unit: degree | Unit: radian |
| 3 | 0010 | 8.44 | 0.1473 |
| 4 | 0110 | 11.25 | 0.1963 |
| 5 | 0111 | 14.06 | 0.2454 |
| 6 | 0101 | 16.88 | 0.2945 |
| 7 | 0100 | 19.69 | 0.3436 |
| 8 | 1100 | 22.50 | 0.3927 |
| 9 | 1101 | 25.31 | 0.4418 |
| 10 | 1111 | 28.13 | 0.4909 |
| 11 | 1110 | 30.94 | 0.5400 |
| 12 | 1010 | 33.75 | 0.5890 |
| 13 | 1011 | 36.56 | 0.6381 |
| 14 | 1001 | 39.38 | 0.6872 |
| 15 | 1000 | 42.19 | 0.7363 |

In a further application of the layered or superposition modulation for BCMCS, layered modulation can be a superposition of any two modulation schemes. In BCMCS, a QPSK enhancement layer is superposed on a base QPSK or 16-QAM layer to obtain the resultant signal constellation. The energy ratio $r$ is the power ratio between the base layer and the enhancement. Furthermore, the enhancement layer is rotated by the angle $\theta$ in counter-clockwise direction.

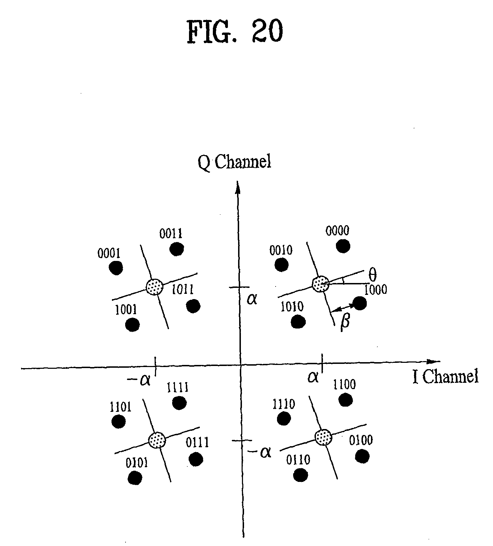

Figure 20 is an exemplary diagram illustrating signal constellation for layered modulation with QPSK base layer and QPSK enhancement layer. Referring to Figure 20, each modulation symbol contains four (4) bits, namely, $s_3$, $s_2$, $s_1$, $s_0$. Here, there are two (2) MSBs which are $s_3$ and $s_1$, and two (2) LSBs which are $s_2$ and so. The two (2) MSBs are from the base layer and the two LSBs come from the enhancement layer

Given energy ratio $r$ between the base layer and enhancement layer, $\alpha = \sqrt{\dfrac{r}{2(1+r)}}$ and $\beta = \sqrt{\dfrac{1}{2(1+r)}}$

can be defined such that $2(\alpha^2+\beta^2)=1$. Here, $\alpha$ denotes the amplitude of the base layer, and $\beta$ denotes the amplitude of enhancement layer. Moreover, $2(\alpha^2+\beta^2)=1$ is a constraint which is also referred to as power constraint and more accurately referred to as normalization.

Table 6 illustrates a layered modulation table with QPSK base layer and QPSK enhancement layer.

**[Table 6]**

| Modulator Input Bits | | | | Modulation Symbols | |
|---|---|---|---|---|---|
| $s_3$ | $s_2$ | $s_1$ | $s_0$ | $m_I(k)$ | $m_Q(k)$ |
| 0 | 0 | 0 | 0 | $\alpha + \sqrt{2}\cos(\theta + \pi/4)\beta$ | $\alpha + \sqrt{2}\sin(\theta + \pi/4)\beta$ |
| 0 | 0 | 1 | 0 | $\alpha + \sqrt{2}\cos(\theta + 3\pi/4)\beta$ | $\alpha + \sqrt{2}\sin(\theta + 3\pi/4)\beta$ |
| 1 | 0 | 0 | 0 | $\alpha + \sqrt{2}\cos(\theta + 7\pi/4)\beta$ | $\alpha + \sqrt{2}\sin(\theta + 7\pi/4)\beta$ |
| 1 | 0 | 1 | 0 | $\alpha + \sqrt{2}\cos(\theta + 5\pi/4)\beta$ | $\alpha + \sqrt{2}\sin(\theta + 5\pi/4)\beta$ |

(continued)

| Modulator Input Bits | | | | Modulation Symbols | |
|---|---|---|---|---|---|
| $s_3$ | $s_2$ | $s_1$ | $s_0$ | $m_I(k)$ | $m_Q(k)$ |
| 0 | 0 | 1 | 1 | $-\alpha + \sqrt{2}\cos(\theta + \pi/4)\beta$ | $\alpha + \sqrt{2}\sin(\theta + \pi/4)\beta$ |
| 0 | 0 | 0 | 1 | $-\alpha + \sqrt{2}\cos(\theta + 3\pi/4)\beta$ | $\alpha + \sqrt{2}\sin(\theta + 3\pi/4)\beta$ |
| 1 | 0 | 1 | 1 | $-\alpha + \sqrt{2}\cos(\theta + 7\pi/4)\beta$ | $\alpha + \sqrt{2}\sin(\theta + 7\pi/4)\beta$ |
| 1 | 0 | 0 | 1 | $-\alpha + \sqrt{2}\cos(\theta + 5\pi/4)\beta$ | $\alpha + \sqrt{2}\sin(\theta + 5\pi/4)\beta$ |
| 1 | 1 | 0 | 0 | $\alpha + \sqrt{2}\cos(\theta + \pi/4)\beta$ | $-\alpha + \sqrt{2}\sin(\theta + \pi/4)\beta$ |
| 1 | 1 | 1 | 0 | $\alpha + \sqrt{2}\cos(\theta + 3\pi/4)\beta$ | $-\alpha + \sqrt{2}\sin(\theta + 3\pi/4)\beta$ |
| 0 | 1 | 0 | 0 | $\alpha + \sqrt{2}\cos(\theta + 7\pi/4)\beta$ | $-\alpha + \sqrt{2}\sin(\theta + 7\pi/4)\beta$ |
| 0 | 1 | 1 | 0 | $\alpha + \sqrt{2}\cos(\theta + 5\pi/4)\beta$ | $-\alpha + \sqrt{2}\sin(\theta + 5\pi/4)\beta$ |
| 1 | 1 | 1 | 1 | $-\alpha + \sqrt{2}\cos(\theta + \pi/4)\beta$ | $-\alpha + \sqrt{2}\sin(\theta + \pi/4)\beta$ |
| 1 | 1 | 0 | 1 | $-\alpha + \sqrt{2}\cos(\theta + 3\pi/4)\beta$ | $-\alpha + \sqrt{2}\sin(\theta + 3\pi/4)\beta$ |
| 0 | 1 | 1 | 1 | $-\alpha + \sqrt{2}\cos(\theta + 7\pi/4)\beta$ | $-\alpha + \sqrt{2}\sin(\theta + 7\pi/4)\beta$ |
| 0 | 1 | 0 | 1 | $-\alpha + \sqrt{2}\cos(\theta + 5\pi/4)\beta$ | $-\alpha + \sqrt{2}\sin(\theta + 5\pi/4)\beta$ |

Referring to Table 6, each column defines the symbol position for each four (4) bits, $s_3$, $s_2$, $s_1$, $s_0$. Here, the position of each symbol is given in a two-dimensional signal space ($m_I$, $m_Q$). This means that each symbol can be represented by $S(t) = LM_I\cos(2\pi f_0 t + \phi_0) + M_Q{}^*\sin(2\pi f_0 t + \phi_0)\phi(t)$. Simply put, the complex modulation symbol $S = (m_I, m_Q)$ for each [$s_3$, $s_2$, $s_1$, so] is specified in $S(t) = LM_I\cos(2\pi f_0 t + \phi_0) + M_Q{}^*\sin(2\pi f_0 t + \phi_0)\phi(t)$.

Here, $\cos(2\pi f_0 t + \phi_0)$ and $\sin(2\pi f_0 t + \phi_0)$ denote the carrier signal with initial phase $\phi_0$ and carrier frequency $f_0$. Moreover, $\varphi(t)$ denotes the pulse-shaping, the shape of a transmit symbol.

In the above definition of $S(t)$, except the $m_I$ and $m_Q$ value, other parameters can usually either be shared between the transmitter and the receiver or be detected by the receiver itself. For correctly demodulating $S(t)$, it is necessary to define and share the possible value information of $m_I$ and $m_Q$.

The possible value of $m_I(k)$ and $m_Q(k)$, which denote the $m_I$ and $m_Q$ value for the $k^{th}$ symbol, are given in Table 1. It shows for representing each group inputs bits $s_3$, $s_2$, $s_1$, $s_0$ the symbol shall be modulated by corresponding parameters shown in the table.

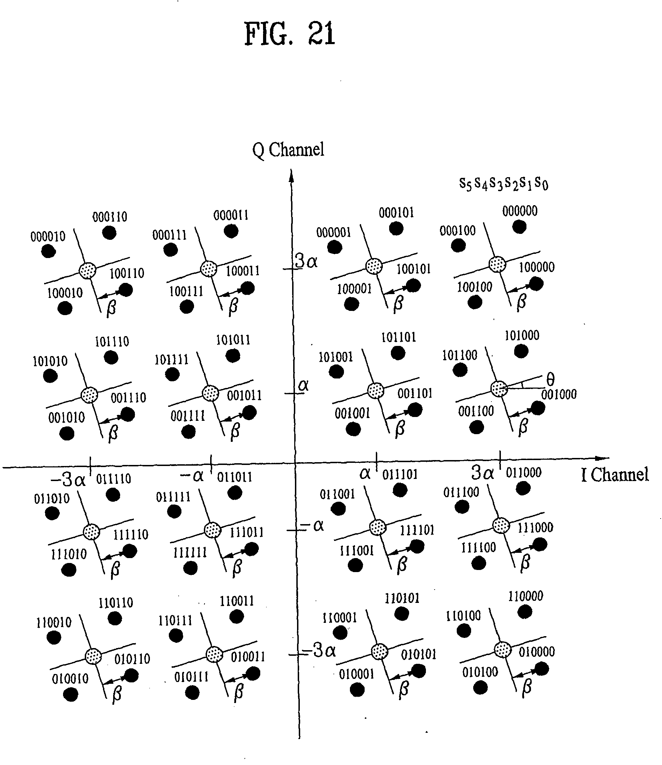

Figure 21 is an exemplary diagram illustrating the signal constellation of the layered modulator with respect to 16QAM/QPSK hierarchical modulation. Referring to another 16QAM/QPSK hierarchical modulation, which means 16QAM base layer and QPSK enhancement layer, each modulation symbol contains six (6) bits - $s_5$, $s_4$, $s_3$, $s_2$, $s_1$, $s_0$. The four (4) MSBs, $s_4$, $s_3$, $s_1$ and $s_0$, come from the base layer, and the two (2) LSBs, $s_4$ and $s_2$, come from the enhancement layer.

Given energy ratio $r$ between the base layer and enhancement layer, $\alpha = \sqrt{\dfrac{r}{2(1+r)}}$ and $\beta = \sqrt{\dfrac{1}{2(1+r)}}$

can be defined such that $2(\alpha^2+\beta^2)=1$. Here, $\alpha$ denotes the amplitude of the base layer, and $\beta$ denotes the amplitude of enhancement layer. Moreover, $2(\alpha^2+\beta^2)=1$ is a constraint which is also referred to as power constraint and more accurately referred to as normalization.

Table 7 illustrates a layered modulation table with 16QAM base layer and QPSK enhancement layer.

[Table 7]

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 0 | 0 | 0 | 0 | 0 | 0 | $3\alpha + \sqrt{2}\cos(\theta+\pi/4)\beta$ | $3\alpha + \sqrt{2}\sin(\theta+\pi/4)\beta$ |
| 0 | 0 | 0 | 1 | 0 | 0 | $3\alpha + \sqrt{2}\cos(\theta+3\pi/4)\beta$ | $3\alpha + \sqrt{2}\sin(\theta+3\pi/4)\beta$ |
| 1 | 0 | 0 | 0 | 0 | 0 | $3\alpha + \sqrt{2}\cos(\theta+7\pi/4)\beta$ | $3\alpha + \sqrt{2}\sin(\theta+7\pi/4)\beta$ |
| 1 | 0 | 0 | 1 | 0 | 0 | $3\alpha + \sqrt{2}\cos(\theta+5\pi/4)\beta$ | $3\alpha + \sqrt{2}\sin(\theta+5\pi/4)\beta$ |
| 0 | 0 | 0 | 1 | 0 | 1 | $\alpha + \sqrt{2}\cos(\theta+\pi/4)\beta$ | $3\alpha + \sqrt{2}\sin(\theta+\pi/4)\beta$ |
| 0 | 0 | 0 | 0 | 0 | 1 | $\alpha + \sqrt{2}\cos(\theta+3\pi/4)\beta$ | $3\alpha + \sqrt{2}\sin(\theta+3\pi/4)\beta$ |
| 1 | 0 | 0 | 1 | 0 | 1 | $\alpha + \sqrt{2}\cos(\theta+7\pi/4)\beta$ | $3\alpha + \sqrt{2}\sin(\theta+7\pi/4)\beta$ |
| 1 | 0 | 0 | 0 | 0 | 1 | $\alpha + \sqrt{2}\cos(\theta+5\pi/4)\beta$ | $3\alpha + \sqrt{2}\sin(\theta+5\pi/4)\beta$ |
| 0 | 0 | 0 | 1 | 1 | 0 | $-3\alpha + \sqrt{2}\cos(\theta+\pi/4)\beta$ | $3\alpha + \sqrt{2}\sin(\theta+\pi/4)\beta$ |
| 0 | 0 | 0 | 0 | 1 | 0 | $-3\alpha + \sqrt{2}\cos(\theta+3\pi/4)\beta$ | $3\alpha + \sqrt{2}\sin(\theta+3\pi/4)\beta$ |
| 1 | 0 | 0 | 1 | 1 | 0 | $-3\alpha + \sqrt{2}\cos(\theta+7\pi/4)\beta$ | $3\alpha + \sqrt{2}\sin(\theta+7\pi/4)\beta$ |
| 1 | 0 | 0 | 0 | 1 | 0 | $-3\alpha + \sqrt{2}\cos(\theta+5\pi/4)\beta$ | $3\alpha + \sqrt{2}\sin(\theta+5\pi/4)\beta$ |
| 0 | 0 | 0 | 0 | 1 | 1 | $-\alpha + \sqrt{2}\cos(\theta+\pi/4)\beta$ | $3\alpha + \sqrt{2}\sin(\theta+\pi/4)\beta$ |
| 0 | 0 | 0 | 1 | 1 | 1 | $-\alpha + \sqrt{2}\cos(\theta+3\pi/4)\beta$ | $3\alpha + \sqrt{2}\sin(\theta+3\pi/4)\beta$ |
| 1 | 0 | 0 | 0 | 1 | 1 | $-\alpha + \sqrt{2}\cos(\theta+7\pi/4)\beta$ | $3\alpha + \sqrt{2}\sin(\theta+7\pi/4)\beta$ |
| 1 | 0 | 0 | 1 | 1 | 1 | $-\alpha + \sqrt{2}\cos(\theta+5\pi/4)\beta$ | $3\alpha + \sqrt{2}\sin(\theta+5\pi/4)\beta$ |
| 1 | 0 | 1 | 0 | 0 | 0 | $3\alpha + \sqrt{2}\cos(\theta+\pi/4)\beta$ | $\alpha + \sqrt{2}\sin(\theta+\pi/4)\beta$ |

(continued)

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 1 | 0 | 1 | 1 | 0 | 0 | $3\alpha + \sqrt{2}\cos(\theta + 3\pi/4)\beta$ | $\alpha + \sqrt{2}\sin(\theta + 3\pi/4)\beta$ |
| 0 | 0 | 1 | 0 | 0 | 0 | $3\alpha + \sqrt{2}\cos(\theta + 7\pi/4)\beta$ | $\alpha + \sqrt{2}\sin(\theta + 7\pi/4)\beta$ |
| 0 | 0 | 1 | 1 | 0 | 0 | $3\alpha + \sqrt{2}\cos(\theta + 5\pi/4)\beta$ | $\alpha + \sqrt{2}\sin(\theta + 5\pi/4)\beta$ |
| 1 | 0 | 1 | 1 | 0 | 1 | $\alpha + \sqrt{2}\cos(\theta + \pi/4)\beta$ | $\alpha + \sqrt{2}\sin(\theta + \pi/4)\beta$ |
| 1 | 0 | 1 | 0 | 0 | 1 | $\alpha + \sqrt{2}\cos(\theta + 3\pi/4)\beta$ | $\alpha + \sqrt{2}\sin(\theta + 3\pi/4)\beta$ |
| 0 | 0 | 1 | 1 | 0 | 1 | $\alpha + \sqrt{2}\cos(\theta + 7\pi/4)\beta$ | $\alpha + \sqrt{2}\sin(\theta + 7\pi/4)\beta$ |
| 0 | 0 | 1 | 0 | 0 | 1 | $\alpha + \sqrt{2}\cos(\theta + 5\pi/4)\beta$ | $\alpha + \sqrt{2}\sin(\theta + 5\pi/4)\beta$ |
| 1 | 0 | 1 | 1 | 1 | 0 | $-3\alpha + \sqrt{2}\cos(\theta + \pi/4)\beta$ | $\alpha + \sqrt{2}\sin(\theta + \pi/4)\beta$ |
| 1 | 0 | 1 | 0 | 1 | 0 | $-3\alpha + \sqrt{2}\cos(\theta + 3\pi/4)\beta$ | $\alpha + \sqrt{2}\sin(\theta + 3\pi/4)\beta$ |
| 1 | 0 | 1 | 1 | 1 | 0 | $-3\alpha + \sqrt{2}\cos(\theta + 7\pi/4)\beta$ | $\alpha + \sqrt{2}\sin(\theta + 7\pi/4)\beta$ |
| 0 | 0 | 1 | 0 | 1 | 0 | $-3\alpha + \sqrt{2}\cos(\theta + 5\pi/4)\beta$ | $\alpha + \sqrt{2}\sin(\theta + 5\pi/4)\beta$ |
| 1 | 0 | 1 | 0 | 1 | 1 | $-\alpha + \sqrt{2}\cos(\theta + \pi/4)\beta$ | $\alpha + \sqrt{2}\sin(\theta + \pi/4)\beta$ |
| 1 | 0 | 1 | 1 | 1 | 1 | $-\alpha + \sqrt{2}\cos(\theta + 3\pi/4)\beta$ | $\alpha + \sqrt{2}\sin(\theta + 3\pi/4)\beta$ |
| 0 | 0 | 1 | 0 | 1 | 1 | $-\alpha + \sqrt{2}\cos(\theta + 7\pi/4)\beta$ | $\alpha + \sqrt{2}\sin(\theta + 7\pi/4)\beta$ |
| 0 | 0 | 1 | 1 | 1 | 1 | $-\alpha + \sqrt{2}\cos(\theta + 5\pi/4)\beta$ | $\alpha + \sqrt{2}\sin(\theta + 5\pi/4)\beta$ |
| 1 | 1 | 0 | 0 | 0 | 0 | $3\alpha + \sqrt{2}\cos(\theta + \pi/4)\beta$ | $-3\alpha + \sqrt{2}\sin(\theta + \pi/4)\beta$ |
| 1 | 1 | 0 | 1 | 0 | 0 | $3\alpha + \sqrt{2}\cos(\theta + 3\pi/4)\beta$ | $-3\alpha + \sqrt{2}\sin(\theta + 3\pi/4)\beta$ |
| 0 | 1 | 0 | 0 | 0 | 0 | $3\alpha + \sqrt{2}\cos(\theta + 7\pi/4)\beta$ | $-3\alpha + \sqrt{2}\sin(\theta + 7\pi/4)\beta$ |
| 0 | 1 | 0 | 1 | 0 | 0 | $3\alpha + \sqrt{2}\cos(\theta + 5\pi/4)\beta$ | $-3\alpha + \sqrt{2}\sin(\theta + 5\pi/4)\beta$ |
| 1 | 1 | 0 | 1 | 0 | 1 | $\alpha + \sqrt{2}\cos(\theta + \pi/4)\beta$ | $-3\alpha + \sqrt{2}\sin(\theta + \pi/4)\beta$ |
| 1 | 1 | 0 | 0 | 0 | 1 | $\alpha + \sqrt{2}\cos(\theta + 3\pi/4)\beta$ | $-3\alpha + \sqrt{2}\sin(\theta + 3\pi/4)\beta$ |
| 0 | 1 | 0 | 1 | 0 | 1 | $\alpha + \sqrt{2}\cos(\theta + 7\pi/4)\beta$ | $-3\alpha + \sqrt{2}\sin(\theta + 7\pi/4)\beta$ |

(continued)

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 0 | 1 | 0 | 0 | 0 | 1 | $\alpha + \sqrt{2}\cos(\theta + 5\pi/4)\beta$ | $-3\alpha + \sqrt{2}\sin(\theta + 5\pi/4)\beta$ |
| 1 | 1 | 0 | 1 | 1 | 0 | $-3\alpha + \sqrt{2}\cos(\theta + \pi/4)\beta$ | $-3\alpha + \sqrt{2}\sin(\theta + \pi/4)\beta$ |
| 1 | 1 | 0 | 0 | 1 | 0 | $-3\alpha + \sqrt{2}\cos(\theta + 3\pi/4)\beta$ | $-3\alpha + \sqrt{2}\sin(\theta + 3\pi/4)\beta$ |
| 0 | 1 | 0 | 1 | 1 | 0 | $-3\alpha + \sqrt{2}\cos(\theta + 7\pi/4)\beta$ | $-3\alpha + \sqrt{2}\sin(\theta + 7\pi/4)\beta$ |
| 0 | 1 | 0 | 0 | 1 | 0 | $-3\alpha + \sqrt{2}\cos(\theta + 5\pi/4)\beta$ | $-3\alpha + \sqrt{2}\sin(\theta + 5\pi/4)\beta$ |
| 1 | 1 | 0 | 0 | 1 | 1 | $-\alpha + \sqrt{2}\cos(\theta + \pi/4)\beta$ | $-3\alpha + \sqrt{2}\sin(\theta + \pi/4)\beta$ |
| 1 | 1 | 0 | 1 | 1 | 1 | $-\alpha + \sqrt{2}\cos(\theta + 3\pi/4)\beta$ | $-3\alpha + \sqrt{2}\sin(\theta + 3\pi/4)\beta$ |
| 0 | 1 | 0 | 0 | 1 | 1 | $-\alpha + \sqrt{2}\cos(\theta + 7\pi/4)\beta$ | $-3\alpha + \sqrt{2}\sin(\theta + 7\pi/4)\beta$ |
| 0 | 1 | 0 | 1 | 1 | 1 | $-\alpha + \sqrt{2}\cos(\theta + 5\pi/4)\beta$ | $-3\alpha + \sqrt{2}\sin(\theta + 5\pi/4)\beta$ |
| 0 | 1 | 1 | 0 | 0 | 0 | $3\alpha + \sqrt{2}\cos(\theta + \pi/4)\beta$ | $-\alpha + \sqrt{2}\sin(\theta + \pi/4)\beta$ |
| 0 | 1 | 1 | 1 | 0 | 0 | $3\alpha + \sqrt{2}\cos(\theta + 3\pi/4)\beta$ | $-\alpha + \sqrt{2}\sin(\theta + 3\pi/4)\beta$ |
| 1 | 1 | 1 | 0 | 0 | 0 | $3\alpha + \sqrt{2}\cos(\theta + 7\pi/4)\beta$ | $-\alpha + \sqrt{2}\sin(\theta + 7\pi/4)\beta$ |
| 1 | 1 | 1 | 1 | 0 | 0 | $3\alpha + \sqrt{2}\cos(\theta + 5\pi/4)\beta$ | $-\alpha + \sqrt{2}\sin(\theta + 5\pi/4)\beta$ |
| 0 | 1 | 1 | 1 | 0 | 1 | $\alpha + \sqrt{2}\cos(\theta + \pi/4)\beta$ | $-\alpha + \sqrt{2}\sin(\theta + \pi/4)\beta$ |
| 0 | 1 | 1 | 0 | 0 | 1 | $\alpha + \sqrt{2}\cos(\theta + 3\pi/4)\beta$ | $-\alpha + \sqrt{2}\sin(\theta + 3\pi/4)\beta$ |
| 1 | 1 | 1 | 1 | 0 | 1 | $\alpha + \sqrt{2}\cos(\theta + 7\pi/4)\beta$ | $-\alpha + \sqrt{2}\sin(\theta + 7\pi/4)\beta$ |
| 1 | 1 | 1 | 0 | 0 | 1 | $\alpha + \sqrt{2}\cos(\theta + 5\pi/4)\beta$ | $-\alpha + \sqrt{2}\sin(\theta + 5\pi/4)\beta$ |
| 0 | 1 | 1 | 1 | 1 | 0 | $-3\alpha + \sqrt{2}\cos(\theta + \pi/4)\beta$ | $-\alpha + \sqrt{2}\sin(\theta + \pi/4)\beta$ |
| 0 | 1 | 1 | 0 | 1 | 0 | $-3\alpha + \sqrt{2}\cos(\theta + 3\pi/4)\beta$ | $-\alpha + \sqrt{2}\sin(\theta + 3\pi/4)\beta$ |
| 1 | 1 | 1 | 1 | 1 | 0 | $-3\alpha + \sqrt{2}\cos(\theta + 7\pi/4)\beta$ | $-\alpha + \sqrt{2}\sin(\theta + 7\pi/4)\beta$ |
| 1 | 1 | 1 | 0 | 1 | 0 | $-3\alpha + \sqrt{2}\cos(\theta + 5\pi/4)\beta$ | $-\alpha + \sqrt{2}\sin(\theta + 5\pi/4)\beta$ |

(continued)

| Modulator Input Bits | | | | | | Modulation Symbols | |
|---|---|---|---|---|---|---|---|
| $s_5$ | $s_4$ | $s_3$ | $s_2$ | $s_1$ | $s_0$ | $m_I(k)$ | $m_Q(k)$ |
| 0 | 1 | 1 | 0 | 1 | 1 | $-\alpha + \sqrt{2}\cos(\theta + \pi/4)\beta$ | $-\alpha + \sqrt{2}\sin(\theta + \pi/4)\beta$ |
| 0 | 1 | 1 | 1 | 1 | 1 | $-\alpha + \sqrt{2}\cos(\theta + 3\pi/4)\beta$ | $-\alpha + \sqrt{2}\sin(\theta + 3\pi/4)\beta$ |
| 1 | 1 | 1 | 0 | 1 | 1 | $-\alpha + \sqrt{2}\cos(\theta + 7\pi/4)\beta$ | $-\alpha + \sqrt{2}\sin(\theta + 7\pi/4)\beta$ |
| 1 | 1 | 1 | 1 | 1 | 1 | $-\alpha + \sqrt{2}\cos(\theta + 5\pi/4)\beta$ | $-\alpha + \sqrt{2}\sin(\theta + 5\pi/4)\beta$ |

Referring to Table 4, each column defines the symbol position for each six (6) bits, $s_5$, $s_4$, $s_3$, $s_2$, $s_1$, $s_0$. Here, the position of each symbol is given in a two-dimensional signal space ($m_I$, $m_Q$). This means that each symbol can be represented by $S(t) = \lfloor M_I \cos(2\pi f_0 t + \phi_0) + M_Q^* \sin(2\pi f_0 t + \phi_0) \rfloor \phi(t)$. Simply put, the complex modulation symbol S = ($m_I$, $m_Q$) for each [$s_5$, $s_4$, $s_3$, $s_2$, $s_1$, $s_0$] is specified in $S(t) = \lfloor M_I \cos(2\pi f_0 t + \phi_0) + M_Q^* \sin(2\pi f_0 t + \phi_0) \rfloor \phi(t)$.

Here, $w_0$ denotes carrier frequency, $\pi_0$ denotes an initial phase of the carrier, and $\phi(t)$ denotes the symbol shaping or pulse shaping wave. Here, $\cos(2\pi f_0 t + \phi_0)$ and $\sin(2\pi f_0 t + \phi_0)$ denote the carrier signal with initial phase $\phi_0$ and carrier frequency $f_0$. Moreover, $\varphi(t)$ denotes the pulse-shaping, the shape of a transmit symbol.

In the above definition of $S(t)$, except the $m_I$ and $m_Q$ value, other parameters can usually either be shared between the transmitter and the receiver or be detected by the receiver itself. For correctly demodulating $S(t)$, it is necessary to define and share the possible value information of $m_I$ and $m_Q$.

The possible value of $m_I(k)$ and $m_Q(k)$, which denote the $m_I$ and $m_Q$ value for the $k^{th}$ symbol, are given in Table 1. It shows for representing each group inputs bits $s_5$, $s_4$, $s_3$, $s_2$, $s_1$, $s_0$ the symbol shall be modulated by corresponding parameters shown in the table.

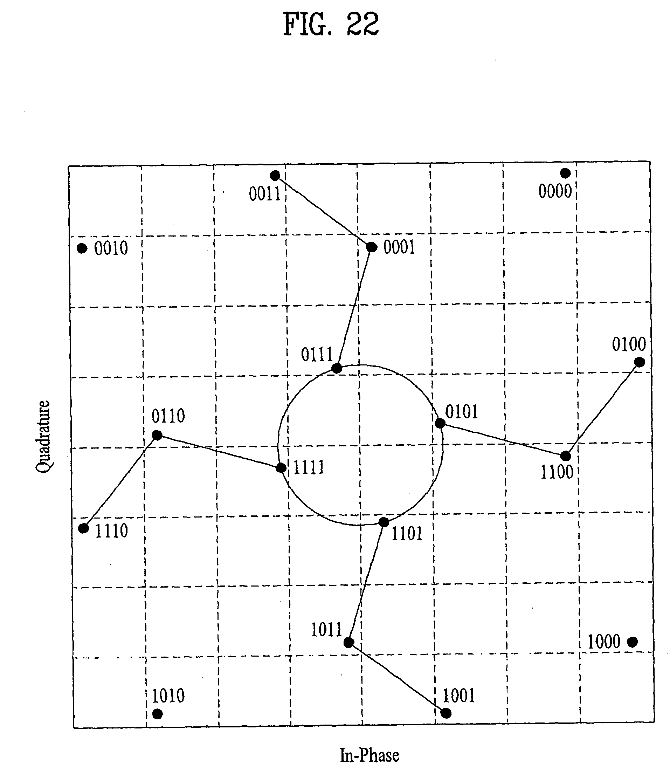

However, the Euclid distance profile can change when the enhancement layer signal constellation is rotated and the power-splitting ratio is changed. This means the original Gray mapping in Fig. 21, for example, may not always be optimal. In this case, it may be necessary to perform bits-to-symbols remapping based on each Euclidean distance file instance. Figure 22 is an exemplary diagram illustrating Gray mapping for rotated QPSK/QPSK hierarchical modulation.

The BER performance of a signal constellation can be dominated by symbol pairs with minimum Euclidean distance, especially when SNR is high. Therefore it is interesting to find optimal bits-to-symbol mapping rules, in which the codes for the closest two signals have minimum difference.

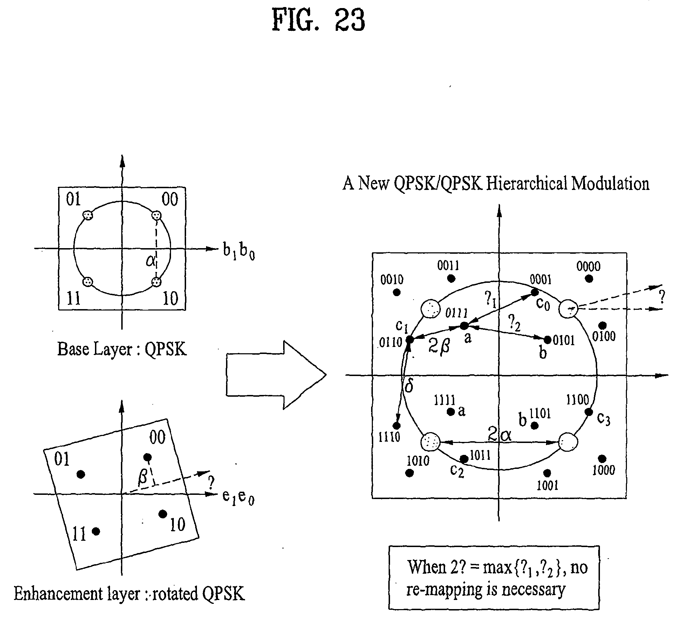

In general, Gray mapping in two-dimensional signals worked with channel coding can be accepted as optimal for minimizing BER for equally likely signals. Gray mapping for regular hierarchical signal constellations is shown in Figure 21, where the codes for the closest two signals are different in only one bit. However, this kind of Euclidean distance profile may not be fixed in hierarchical modulation. An example of the minimum Euclidean distance of 16QAM/QPSK hierarchical modulation with different rotation angles is shown in Figure 23.

Figure 23 is an exemplary diagram illustrating an enhanced QPSK/QPSK hierarchical modulation. Referring to Figure 23, the base layered is modulated with QPSK and the enhancement layer is modulated with rotated QPSK. If the hierarchical modulation is applied, a new QPSK/QPSK hierarchical modulation can be attained as shown in this figure.

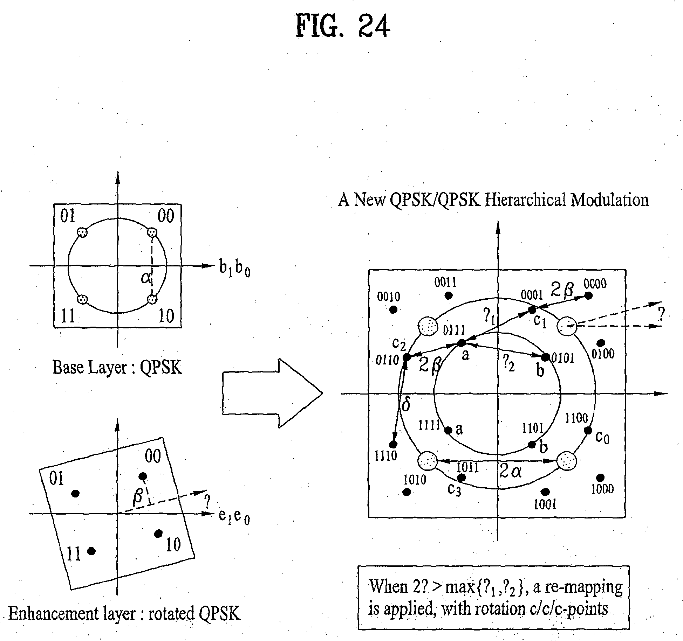

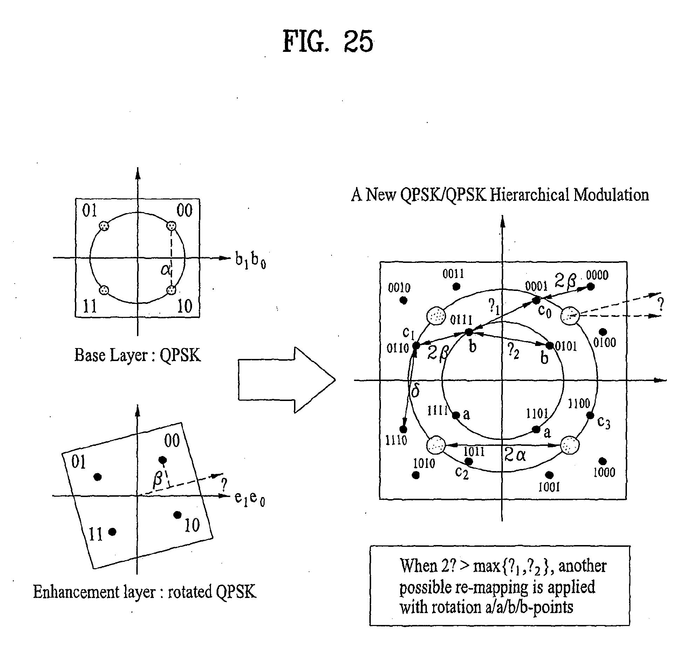

Further, the inter-layer Euclidean distance may become shortest when the power splitting ratio increases in a two-layer hierarchical modulation. This can occur if the enhancement layer is rotated. In order to minimize BER when Euclidean distance profile is changed in hierarchical modulation, the bits-to-symbol mapping can be re-done or performed again, as shown in Figures 24 and 25.

Figure 24 is an exemplary diagram illustrating a new QPSK/QPSK hierarchical modulation. Moreover, Figure 25 is another exemplary diagram illustrating a new QPSK/QPSK hierarchical modulation.

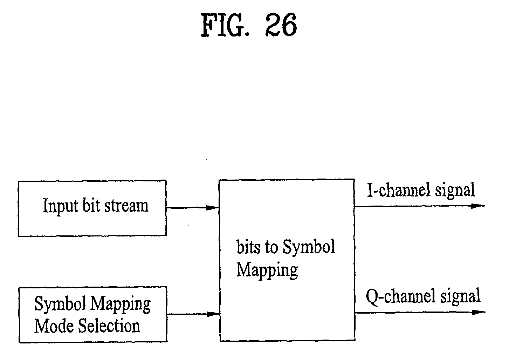

In view of the discussions of above, a new bit-to-symbol generation structure can be introduced. According to the conventional structure, a symbol mapping mode selection was not available. Figure 26 is an exemplary diagram illustrating a new bit-to-symbol block. Here, the symbol mapping mode can be selected when the bits-to-symbol mapping is performed. More specifically, a new symbol mapping mode selection block can be added for controlling and/or selecting bits-to-symbol mapping rule based on the signal constellation of hierarchical modulation and channel coding used.

It will be apparent to those skilled in the art that various modifications and variations can be made in the present invention without departing from the scope of the inventions. Thus, it is intended that the present invention covers the modifications and variations of this invention provided they come within the scope of the appended claims

**Claims**

1. A method of obtaining modulated symbols in a wireless communication system, the method comprising:

   receiving at least one data stream from at least one user;
   grouping the at least one data stream, to which a group-specific precoding matrix is applied, into at least one group, wherein each group is comprised of at least one data stream;
   precoding each of the at least one groups of data streams using the group-specific precoding matrix;
   allocating each of the at least one precoded groups of data streams to a first layer signal constellation and to a second layer signal constellation rotated by a rotation angle on the first layer signal constellation; and
   modulating each of the at least one allocated precoded groups of data streams of the first layer signal constellation and the second layer signal constellation to obtain hierarchical-modulated symbols for each group, using each of the first layer signal constellation specific modulation scheme and the second layer signal constellation specific modulation scheme.

2. The method of claim 1, wherein each of the at least one groups of data streams is precoded independently using independent rotation matrix.

3. The method of claim 1, wherein each of the at least one groups of data streams is precoded jointly using a single rotation matrix.

4. The method of claim 1, wherein the precoding includes at least one of phase adjustment or amplitude adjustment.

5. The method of claim 1, wherein the wireless communication system is any one of orthogonal frequency division multiplexing, OFDM, system, orthogonal frequency division multiple access, OFDMA, system, multi-carrier code division multiplexing, MC-CDM, or multi-carrier code division multiple access, MC-CDMA.

**Patentansprüche**

1. Verfahren zum Erhalten von modulierten Symbolen in einem drahtlosen Kommunikationssystem, wobei das Verfahren umfasst:

   Empfangen mindestens eines Datenstroms von mindestens einem Anwender;
   Gruppieren des mindestens einen Datenstroms, auf den eine gruppenspezifische Vorcodierungsmatrix angewendet wird, in mindestens eine Gruppe, wobei jede Gruppe aus mindestens einem Datenstrom besteht;
   Vorcodieren jeder der mindestens einen Gruppe von Datenströmen unter Verwendung der gruppenspezifischen Vorcodierungsmatrix;
   Zuweisen jeder der mindestens einen vorcodierten Gruppe von Datenströmen zu einer ersten Schichtsignalkonstellation und zu einer zweiten Schichtsignalkonstellation, die auf der ersten Schichtsignalkonstellation um einen Drehwinkel gedreht ist; und
   Modulieren jeder der mindestens einen zugewiesenen vorcodierten Gruppe von Datenströmen der ersten Schichtsignalkonstellation und der zweiten Schichtsignalkonstellation, um hierarchisch modulierte Symbole für jede Gruppe zu erhalten, unter Verwendung eines jeden des für die erste Schichtsignalkonstellation spezifischen Modulationsschemas und des für die zweite Schichtsignalkonstellation spezifischen Modulationsschemas.

2. Verfahren nach Anspruch 1, wobei jede der mindestens einen Gruppe von Datenströmen unabhängig unter Verwendung der unabhängigen Drehmatrix vorcodiert ist.

3. Verfahren nach Anspruch 1, wobei jede der mindestens einen Gruppe von Datenströmen gemeinsam unter Verwendung einer einzigen Drehmatrix vorcodiert ist.

4. Verfahren nach Anspruch 1, wobei das Vorcodieren eine Phasenanpassung und/oder eine Amplitudenanpassung enthält.

**EP 2 018 750 B1**

5. Verfahren nach Anspruch 1, wobei das drahtlose Kommunikationssystem ein orthogonales Frequenzmultiplexsystem, OFDM-System, ein orthogonales Frequenzmehrfachzugriffssystem, OFDMA-System, ein Mehrträgercodemultiplexverfahren, MC-CDM, oder ein Trägercodemehrfachzugriffsverfahren, MC-CDMA, ist.

**Revendications**

1. Procédé d'obtention de symboles modulés dans un système de communication sans fil, le procédé comprenant :

la réception d'au moins un flux de données en provenance d'au moins un utilisateur ;
le regroupement de l'au moins un flux de données, auquel une matrice de précodage spécifique au groupe est appliquée, dans au moins un groupe, dans lequel chaque groupe se compose d'au moins un flux de données ;
le précodage de chacun de l'au moins un groupe de flux de données en utilisant la matrice de précodage spécifique au groupe ;
l'allocation de chacun de l'au moins un groupe précodé de flux de données à une constellation de signaux de première couche et à une constellation de signaux de deuxième couche tournée d'un angle de rotation par rapport à la constellation de signaux de première couche ; et
la modulation de chacun de l'au moins un groupe précodé alloué de flux de données de la constellation de signaux de première couche et de la constellation de signaux de deuxième couche pour obtenir des symboles à modulation hiérarchique pour chaque groupe, en utilisant chacun du schéma de modulation spécifique à la constellation de signaux de première couche et du schéma de modulation spécifique à la constellation de signaux de deuxième couche.

2. Procédé selon la revendication 1, dans lequel chacun de l'au moins un groupe de flux de données est précodé indépendamment en utilisant une matrice de rotation indépendante.

3. Procédé selon la revendication 1, dans lequel chacun de l'au moins un groupe de flux de données est précodé conjointement en utilisant une matrice de rotation unique.

4. Procédé selon la revendication 1, dans lequel le précodage comprend au moins l'un d'un ajustement de phase ou d'un ajustement d'amplitude.

5. Procédé selon la revendication 1, dans lequel le système de communication sans fil est l'un quelconque d'un système de multiplexage par répartition de fréquence orthogonale, OFDM, d'un système d'accès multiples par répartition de fréquence orthogonale, OFDMA, d'un système de multiplexage par répartition de code de porteuses multiples, MC-CDM, ou d'un système d'accès multiples par répartition de code de porteuses multiples, MC-CDMA.

# FIG. 1

# FIG. 2

Data 1 → Phase/amplitude adjusting →

Data 2 → Phase/amplitude adjusting →

Data 3 → Phase/amplitude adjusting →

Data 4 → Phase/amplitude adjusting →

Data 5 → Phase/amplitude adjusting →

Data K → Phase/amplitude adjusting →

OFDM/
OFDMA/
MC-CDM/
MC-CDMA

# FIG. 3

| | | | |
|---|---|---|---|
| Data Stream(s) 1 | Precoding or Rotation including amplitude/phase adjustment when necessary | | |
| Data Stream(s) 2 | Precoding or Rotation including amplitude/phase adjustment when necessary | Sub carrier/ Tone/ Spreading Sequence Mapping | OFDM/ OFDMA/ MC-CDM/ MC-CDMA |
| Data Stream(s) K | Precoding or Rotation including amplitude/phase adjustment when necessary | | |

# FIG. 4

Level 1 Rotation          Level 2 Rotation

# FIG. 5

# FIG. 6

# FIG. 7

# FIG. 8

# FIG. 9

# FIG. 10

# FIG. 11

$$s_5 s_4 s_3 s_2 s_1 s_0 = e_1 e_0 b_3 b_2 b_1 b_0$$

# FIG. 12

# FIG. 13

$$S_3S_2S_1S_0 = e_1 b_1 e_0 b_0$$

# FIG. 14

# FIG. 15

# FIG. 16

# FIG. 17

# FIG. 18

# FIG. 19

# FIG. 20

# FIG. 21

# FIG. 22

# FIG. 23

Base Layer : QPSK

Enhancement layer : rotated QPSK

A New QPSK/QPSK Hierarchical Modulation

When $2? = \max\{?_1, ?_2\}$, no re-mapping is necessary

# FIG. 24

Base Layer : QPSK

Enhancement layer : rotated QPSK

A New QPSK/QPSK Hierarchical Modulation

When 2? > max{?₁,?₂}, a re-mapping is applied, with rotation c/c/c-points

# FIG. 25

Base Layer : QPSK

Enhancement layer : rotated QPSK

A New QPSK/QPSK Hierarchical Modulation

When $2\gamma > \max\{\gamma_1, \gamma_2\}$, another possible re-mapping is applied with rotation a/a/b/b-points

# FIG. 26

```
┌──────────────────┐        ┌────────────────┐
│                  │        │                │      I-channel signal
│ Input bit stream │───────▶│                │─────────────────────▶
│                  │        │                │
└──────────────────┘        │  bits to Symbol│
                            │  Mapping       │
                            │                │
┌──────────────────┐        │                │      Q-channel signal
│ Symbol Mapping   │        │                │─────────────────────▶
│ Mode Selection   │───────▶│                │
└──────────────────┘        └────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1548971 A2

### Non-patent literature cited in the description

- Space-time-frequency block coding over rayleigh fading channels for OFDM systems. **LUO WEI et al.** COMMUNICATION TECHNOLOGY PROCEEDINGS, 2003. ICCT 2003. IN-TERNATIONAL CONFERENCE ON APRIL 9 - 11, 2003. IEEE, 09 April 2003, vol. 2, 1008-1012
- Rate-one Space Frequency Block Codes with Maximum Diversity Gain for MIMO-OFDM. **LEI SHAO et al.** GLOBECOM'03. 2003 - IEEE GLOBAL TELE-COMMUNICATIONS CONFERENCE. CONFERENCE PROCEEDINGS, 01 December 2003
- IEEE GLOBAL TELECOMMUNICATIONS CONFERENCE. IEEE, 01 December 2003, vol. 2, 809-813
- Hierarchical Subgroup Power and Modulation Coding Adaptation - A New Frequency-Space Link Adaptation Scheme in MIMO-OFDM Eigenmode Adaptive Transmission System. **LE HAI DOAN et al.** IEEE 61 ST VEHICULAR TECHNOLOGY CONFERENCE. IEEE, 30 May 2005, vol. 1, 668-672